(19) Europäisches Patentamt
European Patent Office
Office européen des brevets

(11) EP 3 137 317 B1

(12) FASCICULE DE BREVET EUROPEEN

(45) Date de publication et mention de la délivrance du brevet:
**11.04.2018 Bulletin 2018/15**

(21) Numéro de dépôt: **15721142.6**

(22) Date de dépôt: **21.04.2015**

(51) Int Cl.:
***B60C 9/00*** (2006.01) ***B60C 9/20*** (2006.01)
***B60C 9/22*** (2006.01) ***D02G 3/18*** (2006.01)
***D02G 3/48*** (2006.01)

(86) Numéro de dépôt international:
**PCT/EP2015/058602**

(87) Numéro de publication internationale:
**WO 2015/165777 (05.11.2015 Gazette 2015/44)**

(54) **RENFORT PLAT MULTI-COMPOSITE**

FLACHE VERSTÄRKUNGSSTRUKTUR AUS MULTI-COMPOSIT MATERIAL

FLAT REINFORCING STRUCTURE MADE OF MULTI-COMPOSITE MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2014 FR 1453900**

(43) Date de publication de la demande:
**08.03.2017 Bulletin 2017/10**

(73) Titulaire: **Compagnie Générale des Etablissements Michelin**
**63000 Clermont-Ferrand (FR)**

(72) Inventeur: **DELFINO, Antonio**
**F-63040 Clermont-Ferrand Cedex 9 (FR)**

(74) Mandataire: **Desbordes, Guillaume**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 1 167 080**
**WO-A1-2011/012521**
**FR-A1- 2 986 456**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 137 317 B1

Printed by Jouve, 75001 PARIS (FR)

## Description

### 1. DOMAINE DE L'INVENTION

Le domaine de la présente invention est celui des renforts composites et des stratifiés multicouches utilisables notamment pour le renforcement d'articles en caoutchouc tels que des bandages pour véhicules, du type pneumatiques ou non pneumatiques.

Elle se rapporte plus particulièrement à des renforts composites sous forme de rubans à base de monobrins composites faits de filaments en matière minérale noyés dans une résine thermodurcie à hautes propriétés mécaniques et thermiques, et à l'utilisation de tels monobrins comme éléments de renforcement de ces bandages.

### 2. ETAT DE LA TECHNIQUE

Les concepteurs de bandages sont depuis longtemps à la recherche de « renforts » (éléments de renforcement longilignes) du type textiles ou composites, à faible densité, pouvant se substituer avantageusement et efficacement aux fils ou câbles métalliques conventionnels, en vue de réduire notamment le poids de ces bandages et aussi de pallier les éventuels problèmes de corrosion.

Ainsi, la demande de brevet EP 1 167 080 (ou US 7 032 637) a déjà décrit un monobrin en « CVR » (abrégé pour Composite Verre-Résine), à hautes propriétés mécaniques, comportant des fibres de verre continues, unidirectionnelles, imprégnées dans une résine réticulée du type vinylester. Ce monobrin présente, outre une contrainte de rupture en compression élevée, supérieure à sa contrainte de rupture en extension, un allongement à la rupture de l'ordre de 3,0 à 3,5% et un module initial en extension d'au moins 30 GPa ; sa résine thermodurcie présente une Tg (température de transition vitreuse) supérieure à 130°C et un module initial en extension d'au moins 3 GPa.

Grâce aux propriétés ci-dessus, cette demande EP 1 167 080 a montré qu'il était avantageusement possible de substituer à des câbles d'acier des monobrins composites, disposés en particulier sous la bande de roulement en tronçons parallèles, comme nouveaux éléments de renforcement de ceintures de bandages pneumatiques, permettant d'alléger ainsi notablement la structure des pneumatiques.

L'expérience montre toutefois que les monobrins composites décrits dans les documents brevet ci-dessus peuvent être encore améliorés, en particulier pour leur utilisation dans les bandages pour véhicules.

On a constaté en particulier, de manière inattendue, que ces monobrins composites de l'art antérieur, lorsqu'ils étaient utilisés comme renforts de ceintures de certains bandages pneumatiques, pouvaient subir un certain nombre de casses en compression, par un effondrement ou flambage de leur structure, au cours de la fabrication-même de ces bandages, en particulier au cours de l'étape de conformation et/ou de l'étape finale de cuisson en moule de ces bandages qui on le sait est conduite sous haute pression et à une température très élevée, typiquement supérieure à 160°C.

### 3. BREVE DESCRIPTION DE L'INVENTION

Or, poursuivant leurs recherches, les Demanderesses ont découvert un renfort nouveau, à base de monobrins composites, dont les propriétés en compression, flexion ou sous cisaillement transverse sont notablement améliorées par rapport à celles des monobrins composites de l'art antérieur.

Ainsi, selon un premier objet, la présente invention concerne (en référence notamment aux figures 1 à 6 annexées) un renfort plat ayant la forme d'un ruban **(R1, R2, R3)** multicomposite définissant trois directions principales perpendiculaires, axiale (X), transversale (Y) et radiale (Z), de largeur $\mathbf{L_R}$ mesurée selon la direction Y comprise entre 2 et 100 mm et d'épaisseur $\mathbf{E_R}$ mesurée selon la direction Z comprise entre 0,1 et 5 mm, le rapport $L_R/E_R$ étant supérieur à 3, ce ruban multicomposite comportant au moins:

- une pluralité de monobrins **(10, 20)** en matériau composite, orientés selon la direction X, comportant des filaments d'une matière minérale **(101)** noyés dans une résine thermodurcie **(102)** dont la température de transition vitreuse notée $\mathbf{Tg_1}$ est supérieure à 70°C ;
- cette pluralité de monobrins étant enrobée dans une couche de matière thermoplastique **(12).**

On a constaté que la forme plate spécifique du ruban, combiné à la présence de cette couche de matière thermoplastique, était capable de conférer des propriétés d'endurance en compression, flexion ou sous cisaillement transverse (perpendiculairement à l'axe X des monobrins et du ruban) qui sont notablement améliorées, en particulier à une température élevée, par rapport à celles de monobrins en matériau composite utilisés conventionnellement, c'est-à-dire sans cette couche de matière thermoplastique les enrobant.

Qui plus est, le caractère thermoplastique et donc thermofusible de la matière recouvrant les monobrins, permet très avantageusement de fabriquer, en quelque sorte par « collage ou assemblage thermique », une grande variété de

structures multicomposites plus complexes, à base de rubans conformes à l'invention, ceci par fusion au moins partielle de cette matière de recouvrement, puis refroidissement de l'ensemble une fois les rubans élémentaires disposés ensemble, agencés de manière appropriée.

L'invention concerne également tout stratifié multicouches comportant au moins un ruban multicomposite selon l'invention, disposé entre et au contact de deux couches de composition de caoutchouc, notamment diénique.

L'invention concerne également l'utilisation d'un renfort multicomposite ou stratifié multicouches selon l'invention, comme élément de renforcement d'articles en caoutchouc tels que des bandages, pneumatiques ou non pneumatiques.

L'invention concerne également ces articles en caoutchouc et bandages eux-mêmes, tant à l'état cru (c'est-à-dire avant cuisson ou vulcanisation) qu'à l'état cuit (après cuisson).

Les bandages de l'invention, en particulier, peuvent être destinés à des véhicules à moteur du type tourisme, 4x4, "SUV" (*Sport Utility Vehicles*), mais également à des véhicules industriels choisis parmi camionnettes, "Poids-lourd" - i.e., métro, bus, engins de transport routier (camions, tracteurs, remorques), véhicules hors-la-route -, engins agricoles ou de Génie civil, avions, autres véhicules utilitaires de transport ou de manutention.

Le ruban multicomposite et le stratifié multicouches de l'invention sont tout particulièrement utilisables comme éléments de renforcement dans des armatures de sommet (ou ceintures) ou dans les armatures de carcasse de bandages pneumatiques, comme décrit notamment dans les documents EP 1 167 080 ou US 7 032 637 précités. Ils pourraient également être présents dans la zone bourrelet de tels bandages.

Le ruban multicomposite de l'invention est aussi avantageusement utilisable, en raison de sa faible densité et de ses propriétés en compression, flexion et sous cisaillement transverse qui sont améliorées, comme élément de renforcement dans les bandages ou roues flexibles du type non pneumatiques, c'est-à-dire supportés structurellement (sans pression interne). De tels bandages sont bien connus de l'homme du métier (voir par exemple EP 1 242 254 ou US 6 769 465, EP 1 359 028 ou US 6 994 135, EP 1 242 254 ou US 6 769 465), US 7 201 194, WO 00/37269 ou US 6 640 859, WO 2007/085414, WO 2008/080535, WO 2009/033620, WO 2009/135561, WO 2012/032000) ; lorsqu'ils sont associés à tout élément mécanique rigide destiné à assurer la liaison entre le bandage flexible et le moyeu d'une roue, ils remplacent l'ensemble constitué par le bandage pneumatique, la jante et le disque tels qu'on les connaît sur la plupart des véhicules routiers actuels.

L'invention ainsi que ses avantages seront aisément compris à la lumière de la description détaillée et des exemples de réalisation qui suivent, ainsi que des figures 1 à 8 relatives à ces exemples qui schématisent (sans respect d'une échelle spécifique) :

- en coupe transversale, un monobrin (10) utilisable dans un renfort multicomposite conforme à l'invention (Fig. 1) ;
- en coupe transversale, un exemple (R1) de ruban multicomposite conforme à l'invention à base de monobrins à section circulaire (10) (Fig. 2) ;
- en coupe transversale, un autre exemple (R2) de ruban multicomposite conforme à l'invention à base de monobrins à section circulaire (Fig. 3) ;
- en coupe transversale, un autre exemple de monobrin (20), à section rectangulaire, utilisable dans un ruban multicomposite conforme à l'invention (Fig. 4) ;
- en coupe transversale, un autre exemple (R3) de ruban multicomposite conforme à l'invention à base de monobrins (20) à section rectangulaire (Fig. 5);
- en coupe transversale, un exemple (30) de stratifié multicouches selon l'invention comportant un ruban multicomposite selon l'invention (par exemple R1) lui-même disposé entre deux couches de compositions de caoutchouc (Fig. 6) ;
- un dispositif utilisable pour la fabrication d'un monobrin (10 ou 20) utilisable comme élément constitutif de base d'un ruban multicomposite selon l'invention (Fig. 7) ;
- en coupe radiale, un exemple de bandage pneumatique selon l'invention, incorporant un ruban multicomposite et un stratifié multicouches selon l'invention (Fig. 8).

## 4. DESCRIPTION DETAILLEE DE L'INVENTION

Dans la présente demande, sauf indication expresse différente, tous les pourcentages (%) indiqués sont des pourcentages en masse.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

L'invention concerne donc un renfort du type multicomposite, en d'autres termes un composite de composite, qui a pour caractéristique d'être plat, de se présenter sous la forme d'un ruban, c'est-à-dire d'un élément continu longiligne étroit, de grande longueur par rapport aux dimensions de sa section.

Par renfort « plat », on entend ici par convention et de manière générale un renfort dont le ratio largeur sur épaisseur ($L_R/E_R$) de la section droite est supérieur à 3, de préférence supérieur à 5, quelle que soit la forme particulière (rectangulaire ou non rectangulaire, par exemple ovale ou oblongue, concave ou convexe) de sa section droite, étant entendu que la forme préférentielle de la section droite du ruban est sensiblement rectangulaire.

Ce ruban ou renfort plat multicomposite, tel que schématisé par exemple partiellement à la figure 2 (**R1**), pouvant définir trois directions principales perpendiculaires, axiale (X), transversale (Y) et radiale (Z), présente donc une largeur $\mathbf{L_R}$ mesurée selon Y comprise entre 2 et 100 mm et une épaisseur $\mathbf{E_R}$ mesurée selon Z comprise entre 0,1 et 5 mm, le rapport $L_R/E_R$ étant par définition supérieur à 3, de préférence supérieur à 5.

Il a pour caractéristiques essentielles de comporter au moins :

- une pluralité de monobrins **(10)** en matériau composite, orientés selon la direction X (donc disposés côte à côte et normalement au plan Y, Z de leur section droite), comportant des filaments d'une matière minérale **(101)** noyés dans une résine thermodurcie **(102)** dont la température de transition vitreuse notée $\mathbf{Tg_1}$ est supérieure à 70°C ;
- cette pluralité de monobrins étant enrobée dans une couche de matière thermoplastique **(12).**

La structure du ruban multicomposite de l'invention est décrite en détail ci-après.

Les figures 2, 3 et 5 annexées illustrent de manière très schématique, en coupes transversales, des exemples (notés **R1, R2** ou **R3**) de rubans multicomposites conformes à l'invention respectivement à base de monobrins à section droite cylindrique (10) ou non cylindrique, par exemple rectangulaire ou carrée (20).

On voit que la structure des rubans conformes à l'invention peut être définie selon les trois directions principales perpendiculaires, une direction axiale **(X)** correspondant à l'axe longitudinal ou longueur du ruban, une direction transversale **(Y)** correspondant à la direction de la largeur $\mathbf{L_R}$ et une direction dite radiale **(Z)** correspondant à l'épaisseur $\mathbf{E_R}$.

Préférentiellement, leur largeur $\mathbf{L_R}$ mesurée selon la direction Y est comprise entre 5 et 50 mm et leur épaisseur $\mathbf{E_R}$ mesurée selon la direction Z est comprise entre 0,1 et 5 mm ; le rapport $L_R/E_R$ est de préférence supérieur à 5, plus préférentiellement supérieur à 10.

De préférence, en particulier lorsque le ruban de l'invention est destiné à renforcer un article en caoutchouc tel qu'un bandage pour véhicule, la largeur $\mathbf{L_R}$ est comprise entre 10 et 40 mm, plus préférentiellement entre 10 et 25 mm, et l'épaisseur $\mathbf{E_R}$ est comprise entre 0,15 et 3 mm, plus préférentiellement entre 0,20 et 2,5 mm) ; le rapport $\mathbf{L_R/E_R}$ est plus préférentiellement entre 10 et 50, en particulier entre 10 et 30.

Comme illustré par exemple aux figures 1 et 4, chaque monobrin **(10** ou **20)** en matériau composite, orienté selon la direction X, comporte des filaments d'une matière minérale **(101)** noyés dans une résine thermodurcie **(102)** dont la température de transition vitreuse notée $\mathbf{Tg_1}$ est supérieure à 70°C, de préférence supérieure à 100°C, plus préférentiellement supérieure 150°C, en particulier supérieure à 160°C, plus particulièrement supérieure à 170C.

Comme illustré par exemple aux figures 2, 3 et 5, l'ensemble des monobrins composites (10a, 10b, 10c, ... ; 20a, 20b, 20c, ...) est enrobé par une couche de matière thermoplastique **(12),** noyé dans cette dernière, matière dont la température de transition vitreuse notée $\mathbf{Tg_2}$ est de préférence supérieure à -30°C, plus préférentiellement supérieure à 20°C, encore plus préférentiellement supérieure à 50°C, en particulier supérieure à 70°C.

L'épaisseur notée $\mathbf{D_M}$ des monobrins constitutifs du ruban multicomposite de l'invention, mesurée selon Z, est de préférence comprise entre 0,05 et 3,0 mm, plus préférentiellement entre 0,1 et 2,5 mm, en particulier entre 0,15 et 2,0 mm. Cette caractéristique couvre aussi bien des monobrins composites de forme essentiellement cylindrique (à section droite circulaire) comme illustré par exemple à la figure 1, que des monobrins composites de formes différentes, par exemple de forme oblongue (c'est-à-dire plus ou moins aplatie) ou de section droite rectangulaire (y compris carrée) comme illustré par exemple à la figure 4. Dans le cas d'une section droite circulaire, l'épaisseur du monobrin $\mathbf{D_M}$ correspond à son diamètre.

L'allongement à la rupture noté **Ar** du ruban multicomposite de l'invention, mesuré à 20°C, est de préférence égal ou supérieur à 3,0%, plus préférentiellement égal ou supérieur à 3,5%.

Son module en extension (module d'Young, ou module initial) longitudinal (c'est-à-dire selon la direction X) noté $\mathbf{E_{RL20}}$, mesuré à 20°C, est de préférence supérieur à 10 GPa, en particulier compris entre 10 et 20 GPa ; il est plus préférentiellement supérieur à 12 GPa, en particulier compris entre 12 et 20 GPa.

Son module en extension (module d'Young, ou module initial) transversal (c'est-à-dire selon la direction Y) noté $\mathbf{E_{RT20}}$, mesuré à 20°C, est de préférence supérieur à 300 MPa, plus préférentiellement compris entre 300 et 3000 MPa, encore plus préférentiellement supérieur à 1000 MPa, en particulier compris entre 1000 et 3000 MPa ; il est plus particulièrement supérieur à 1300 MPa, en particulier compris entre 1300 et 2500 MPa.

Dans ce ruban de l'invention, le module initial en extension ($\mathbf{E_{M20}}$, selon X) de chaque monobrin, mesuré à 20°C, est de préférence supérieur à 30 GPa, plus préférentiellement supérieur à 33 GPa.

Les propriétés mécaniques en extension ci-dessus (**Ar**, $\mathbf{E_{RL20}}$, $\mathbf{E_{RT20}}$ et $\mathbf{E_{M20}}$) sont mesurées de manière connue à l'aide d'une machine de traction « INSTRON » du type 4466 (logiciel BLUEHILL-2 fourni avec la machine de traction), selon la norme ASTM D 638, sur des rubans ou des monobrins bruts de fabrication c'est-à-dire non encollés,

ou bien encollés (c'est-à-dire prêts à l'emploi), ou encore extraits de l'article en caoutchouc qu'ils renforcent. Avant mesure, ces rubans ou ces monobrins sont soumis à un conditionnement préalable (stockage pendant au moins 24 heures dans une atmosphère standard selon la norme européenne DIN EN 20139 (température de 20 ± 2°C ; hygrométrie de 50 ± 5 %)). Les échantillons testés subissent une traction sur une longueur initiale de 400 mm à une vitesse nominale de 100 m/min, sous une prétension standard de 0,5 cN/tex. Tous les résultats donnés sont une moyenne de 10 mesures.

Typiquement, les filaments de matière minérale **(101)** sont présents sous la forme d'une fibre multifilamentaire unique ou de plusieurs fibres multifilamentaires (si elles sont plusieurs, elles sont de préférence essentiellement unidirectionnelles), chacune d'entre elles pouvant comporter plusieurs dizaines, centaines voire milliers de filaments unitaires. Ces filaments unitaires très fins ont généralement et de préférence, en particulier lorsqu'ils sont en verre, un diamètre moyen de l'ordre de 5 à 30 µm, plus préférentiellement de 10 à 20 µm. Les filaments de matière minérale sont eux-mêmes préférentiellement orientés selon l'axe principal X du ruban.

Par « résine », on entend ici la résine en tant que telle et toute composition à base de cette résine et comportant au moins un additif (c'est-à-dire un ou plusieurs additifs). Par résine « thermodurcie » ou « réticulée », on entend bien entendu que la résine est durcie (photodurcie et/ou thermodurcie), en d'autres termes qu'elle se présente sous la forme d'un réseau de liaisons tridimensionnelles, dans un état propre aux polymères dits thermodurcissables (par opposition aux polymères dits thermoplastiques).

Selon un mode de réalisation particulièrement préférentiel, la partie réelle du module complexe ($\mathbf{E'_{150}}$) de chaque monobrin, mesurée à 150°C par la méthode DTMA, est supérieure à 25 GPa, de préférence supérieure à 30 GPa.

Selon un autre mode de réalisation particulièrement préférentiel, pour un compromis optimisé des propriétés thermiques et mécaniques du ruban multicomposite de l'invention, le rapport $\mathbf{E'_{(Tg1 - 25)}}$ / $\mathbf{E'_{20}}$ est supérieur à 0,85, de préférence supérieur à 0,90, $\mathbf{E'_{20}}$ et $\mathbf{E'_{(Tg1 - 25)}}$ étant la partie réelle du module complexe de chaque monobrin mesurée par DMTA, respectivement à 20°C et à une température exprimée en °C égale à ($Tg_1$ - 25).

Les mesures de **E'** sont effectuées de manière connue par DMTA (« *Dynamical Mechanical Thermal Analysis* »), avec un viscoanalyseur « DMA+ 450 » de ACOEM (France), utilisant le logiciel « Dynatest 6.83 / 2010 » pilotant des essais de flexion, traction ou torsion.

Selon ce dispositif, le test de flexion trois points ne permettant pas de manière connue de rentrer les données géométriques initiales pour un monobrin de section circulaire, on peut seulement introduire la géométrie d'une section rectangulaire (ou carrée). Afin d'obtenir une mesure précise du module **E'** dans le cas d'un monobrin cylindrique de diamètre $\mathbf{D_M}$, on introduit par convention dans le logiciel une section carrée de côté « **a** » ayant le même moment d'inertie de surface, ceci afin de travailler à même raideur **R** des éprouvettes testées.

Les relations bien connues qui suivent doivent s'appliquer (E étant le module du matériau, $I_s$ le moment d'inertie de surface du corps considéré, et * le symbole de multiplication) :

$$\mathbf{R} = E_{composite} * I_{section\ circulaire} = E_{composite} * I_{section\ carrée}$$

avec :

$$I_{section\ circulaire} = \pi * \mathbf{D_M}^4 / 64 \ \text{ et } I_{section\ carrée} = \mathbf{a}^4 / 12$$

On en déduit aisément la valeur du côté « **a** » du carré équivalent de même inertie de surface que celle de la section (circulaire) du monobrin de diamètre $\mathbf{D_M}$, selon l'équation :

$$\mathbf{a} = \mathbf{D_M} * (\pi/6)^{0,25}.$$

Dans le cas où la section droite de l'échantillon testé n'est ni circulaire ni rectangulaire, quelle que soit sa forme particulière, le même mode de calcul s'appliquera en déterminant préalablement le moment d'inertie de surface $I_s$ sur une coupe droite de l'échantillon testé.

L'éprouvette à tester, généralement de section circulaire et d'épaisseur ou diamètre $\mathbf{D_M}$, a une longueur de 35 mm. Elle est disposée horizontalement sur deux appuis distants de 24 mm. Une sollicitation répétée en flexion est appliquée perpendiculairement au centre de l'éprouvette, à mi-distance des deux appuis, sous la forme d'un déplacement vertical d'amplitude égale à 0,1 mm (déformation donc asymétrique, l'intérieur de l'éprouvette étant uniquement sollicité en compression et pas en extension), à une fréquence de 10 Hz.

Le programme suivant est ensuite appliqué : sous cette sollicitation dynamique, l'éprouvette est progressivement chauffée de 25°C à 260°C avec une rampe de 2°C/min. A la fin du test on obtient les mesures du module élastique E', du module visqueux E" et de l'angle de perte (δ) en fonction de la température (où E' est la partie réelle et E" la partie

imaginaire du module complexe) ; on rappellera ici simplement que la température de transition vitreuse peut être également mesurée par DTMA, elle correspond au maximum (pic) de tan($\delta$).

Selon un mode de réalisation préférentiel, la déformation élastique en compression sous flexion de chaque monobrin est supérieure à 3,0%, plus préférentiellement supérieure à 3,5%. Selon un autre mode de réalisation préférentiel, la contrainte de rupture en compression sous flexion de chaque monobrin est supérieure à 1 000 MPa, plus préférentiellement supérieure à 1 200 MPa.

Les propriétés ci-dessus en compression sous flexion sont mesurées sur le monobrin comme décrit dans la demande EP 1 167 080 précitée, par la méthode dite du test de boucle (D. Inclair, J. App. Phys. 21, 380, 1950). Dans le cas présent, on réalise une boucle que l'on amène progressivement au point de rupture. La nature de la rupture, facilement observable en raison de la grande taille de la section, permet immédiatement de se rendre compte que le monobrin, sollicité en flexion jusqu'à rupture, se rompt du côté où la matière est en extension, ce que l'on identifie par simple observation. Etant donné que dans ce cas les dimensions de la boucle sont importantes, il est possible à tout instant de lire le rayon du cercle inscrit dans la boucle. Le rayon du cercle inscrit juste avant le point de rupture correspond au rayon de courbure critique, désigné par Rc.

La formule suivante permet ensuite de déterminer par le calcul la déformation élastique critique notée Ec (où r correspond au rayon du monobrin, c'est-à-dire $D_M/2$) :

$$Ec = r / (Rc + r)$$

La contrainte de rupture en compression sous flexion notée $\sigma_c$ est obtenue par le calcul par la formule suivante (où E est le module initial en extension) :

$$\sigma_c = Ec * E$$

Puisque, dans le cas préférentiel, en particulier dans le cas plus préférentiel d'un monobrin en CVR, la rupture de la boucle apparaît dans la partie en extension, on en conclut que, en flexion, la contrainte de rupture en compression est supérieure à la contrainte de rupture en extension.

On peut également procéder à la rupture en flexion d'un barreau rectangulaire selon la méthode dite des trois points (ASTM D 790). Cette méthode permet également de vérifier, visuellement, que la nature de la rupture est bien en extension.

Selon un mode de réalisation préférentiel, la contrainte de rupture en compression pure de chaque monobrin est supérieure à 700 MPa, plus préférentiellement supérieure à 900 MPa, en particulier supérieure à 1 100 MPa. Pour éviter le flambage du monobrin sous compression, cette grandeur est mesurée selon la méthode décrite dans la publication « Critical compressive stress for continuous fiber unidirectional composites » de Thompson et al, Journal of Composite Materials, 46(26), 3231-3245.

Préférentiellement, dans chaque monobrin, le taux d'alignement des filaments de matière minérale, en particulier de verre, est tel que plus de 85% (% en nombre) des filaments ont une inclinaison par rapport à l'axe du monobrin qui est inférieure à 2,0 degrés, plus préférentiellement inférieure à 1,5 degrés, cette inclinaison (ou défaut d'alignement) étant mesuré comme décrit dans la publication ci-dessus de Thompson et al.

Préférentiellement, le taux pondéral de fibres dans chaque monobrin, en particulier dans chaque monobrin en CVR, est compris entre 60 et 80%, de préférence entre 65 et 75%.

Ce taux pondéral est calculé en faisant le rapport du titre de la fibre initiale sur le titre du monobrin. Le titre (ou densité linéique) est déterminé sur au moins trois échantillons, chacun correspondant à une longueur de 50 m, par pesée de cette longueur ; le titre est donné en tex (poids en grammes de 1000 m de produit - pour rappel, 0, 111 tex équivaut à 1 denier).

De préférence, la densité (ou masse volumique) de chaque monobrin, en particulier en CVR, est comprise entre 1,8 et 2,1. Elle est mesurée (à 23°C) à l'aide d'une balance spécialisée de la société Mettler Toledo de type « PG503 DeltaRange » ; les échantillons, de quelques cm, sont successivement pesés dans l'air et plongés dans de l'éthanol ; le logiciel de l'appareil détermine ensuite la densité moyenne sur trois mesures.

De préférence, les fibres multifilamentaires minérales sont choisies parmi les fibres de verre, les fibres de carbone, les fibres de bore, les fibres céramiques (englobant les fibres d'oxyde telles que fibres de silice ou d'alumine, et les fibres de non oxyde telles que fibres de carbure de silicium), et les mélanges de telles fibres.

En d'autres termes, la matière minérale constitutive des filaments des monobrins est choisie préférentiellement parmi verre, carbone, bore et céramique. Plus préférentiellement, la matière minérale est du verre pour la fabrication de monobrins dits en « CVR » (abrégé pour Composite Verre-Résine).

La résine de départ utilisée est par définition une résine réticulable (i.e., durcissable) susceptible d'être réticulée,

durcie par toute méthode connue, par exemple par un rayonnement UV (ou UV-visible), de préférence émettant dans un spectre allant au moins de 300 nm à 450 nm.

A titre de résine réticulable, on utilise de préférence une résine polyester ou vinylester, plus préférentiellement une résine vinylester. Par résine "polyester", on entend de manière connue une résine du type polyester insaturé. Les résines vinylester sont quant à elles bien connues dans le domaine des matériaux composites.

Sans que cette définition soit limitative, la résine vinylester est préférentiellement du type époxyvinylester. On utilise plus préférentiellement une résine vinylester, notamment du type époxyde, qui au moins pour partie est à base (c'est-à-dire greffée sur une structure du type) novolaque (encore appelée phénoplaste) et/ou bisphénolique, soit préférentiellement une résine vinylester à base novolaque, bisphénolique, ou novolaque et bisphénolique.

Une résine époxyvinylester à base novolaque (partie entre crochets dans la formule I ci-dessous) répond par exemple, de manière connue, à la formule (I) qui suit :

(I)

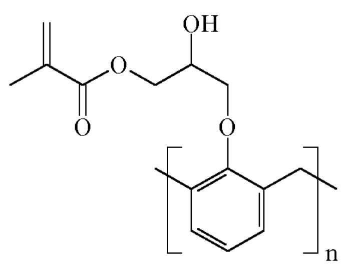

Une résine époxyvinylester à base bisphénolique A (partie entre crochets de la formule (II) ci-dessous) répond par exemple à la formule (le "A" rappelant que le produit est fabriqué à l'aide d'acétone):

(II)

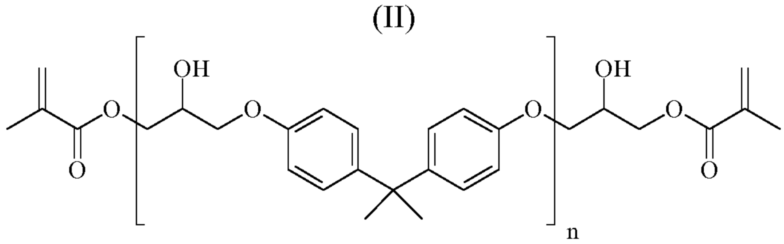

Une résine époxyvinylester de type novolaque et bisphénolique a montré d'excellents résultats. A titre d'exemple d'une telle résine, on peut citer notamment les résines vinylester « ATLAC 590 » et « E-Nova FW 2045 » de la société DSM (diluées avec environ 40% de styrène). Des résines époxyvinylester sont disponibles auprès d'autres fabricants tels que par exemple AOC (USA - résines « VIPEL »).

De préférence, dans le renfort multicomposite de l'invention, le module initial en extension de la résine thermodurcie, mesuré à 20°C, est supérieur à 3,0 GPa, plus préférentiellement supérieur à 3,5 GPa.

Des monobrins préférentiels en CVR, pouvant servir à la fabrication du ruban de l'invention, sont bien connus ; ils peuvent être préparés selon des procédés connus comportant de préférence au moins les étapes suivantes :

- réaliser un arrangement rectiligne de fibres (filaments) de verre et entraîner cet arrangement dans une direction d'avancement :
- dans une chambre à vide, dégazer l'arrangement de fibres par l'action du vide ;
- en sortie de la chambre à vide, après dégazage, traverser une chambre d'imprégnation sous vide de manière à imprégner ledit arrangement de fibres par une résine ou composition de résine thermodurcissable, à l'état liquide, pour obtenir un imprégné contenant les filaments de verre et la résine ;
- faire passer ledit imprégné au travers d'une filière de calibrage ayant une section de surface et de forme prédéfinies, pour lui imposer une forme de monobrin (par exemple un monofilament de section droite ronde ou un ruban de section droite rectangulaire) ;
- en aval de la filière, dans une chambre d'irradiation UV, polymériser la résine sous l'action des UV ;
- puis enrouler pour stockage intermédiaire le monobrin ainsi obtenu.

Toutes les étapes ci-dessus (arrangement, dégazage, imprégnation, calibrage, polymérisation et enroulage

final) sont des étapes bien connues de l'homme du métier, ainsi que les matières (fibres multifilamentaires et compositions de résine) utilisées ; elles ont par exemple été décrites dans les demandes EP-A-1 074 369 et EP-A-1 174 250.

On rappellera notamment qu'avant toute imprégnation des fibres, est conduite préférentiellement une étape de dégazage de l'arrangement de fibres par l'action du vide, afin notamment de renforcer l'efficacité de l'imprégnation ultérieure et surtout de garantir l'absence de bulles à l'intérieur du monobrin composite final.

Après traversée de la chambre à vide, les filaments de verre entrent dans une chambre d'imprégnation qui est totalement pleine de résine d'imprégnation, donc dépourvue d'air : c'est en ce sens qu'on peut qualifier cette étape d'imprégnation d'« imprégnation sous vide ».

La résine (composition de résine) d'imprégnation comporte de préférence un photo-initiateur sensible (réactif) aux UV au-delà de 300 nm, de préférence entre 300 et 450 nm. Ce photo-initiateur est utilisé à un taux préférentiel de 0,5 à 3%, plus préférentiellement de 1 à 2,5%. Elle peut également comporter un agent de réticulation, par exemple à un taux compris entre 5% et 15% (% en poids de composition d'imprégnation).

De préférence, ce photo-initiateur est de la famille des composés phosphine, plus préférentiellement un oxyde de bis(acyl)phosphine comme par exemple l'oxyde de bis-(2,4,6-triméthylbenzoyl)-phénylphosphine ("Irgacure 819" de la société BASF) ou un oxyde de mono(acyl)phosphine (par exemple "Esacure TPO" de la société Lamberti), de tels composés phosphine pouvant être utilisés en mélange avec d'autres photo-initiateurs, par exemple des photo-initiateurs de type alpha-hydroxy-cétone tels que par exemple la diméthylhydroxy-acétophénone (e.g. «Esacure KL200 » de Lamberti) ou la 1-hydroxy-cyclohexyl-phényl-cétone (e.g. « Esacure KS300 » de Lamberti), des benzophénones telles que la 2,4,6-triméthylbenzophénone (e.g. « Esacure TZT » de Lamberti) et/ou des dérivés de thioxanthones comme par exemple l'isopropylthioxanthone (e.g. « Esacure ITX » de Lamberti).

La filière dite de calibrage permet, grâce à une section droite de dimensions déterminées, généralement et de préférence circulaire ou rectangulaire (y compris carrée), d'ajuster la proportion de résine par rapport aux fibres de verre tout en imposant à l'imprégné la forme et l'épaisseur visées pour le monobrin final.

La chambre de polymérisation ou d'irradiation UV a ensuite pour fonction de polymériser, réticuler la résine sous l'action des UV. Elle comporte un ou de préférence plusieurs irradiateurs UV, constitué(s) par exemple chacun par une lampe UV de longueur d'onde de 200 à 600 nm.

Le monobrin en CVR final ainsi formé à travers la chambre d'irradiation UV, dans lequel la résine est maintenant à l'état solide, est ensuite récolté par exemple sur une bobine de réception sur laquelle il peut être enroulé sur une très grande longueur.

Entre la filière de calibrage et le support de réception finale, on préfère maintenir les tensions subies par les fibres de verre à un niveau modéré, de préférence compris entre 0,2 et 2,0 cN/tex, plus préférentiellement entre 0,3 et 1,5 cN/tex ; pour contrôler cela, on pourra par exemple mesurer ces tensions directement en sortie de la chambre d'irradiation, à l'aide de tensiomètres appropriés bien connus de l'homme du métier.

On obtient finalement un bloc composite terminé de fabrication tel que schématisé sur la figure 1, sous la forme d'un monobrin en CVR continu **(10)** d'épaisseur ou diamètre $\mathbf{D_M}$, de très grande longueur relativement à sa section (dans cet exemple circulaire), dont les filaments de verre unitaires **(101)** sont répartis de manière homogène dans tout le volume de résine durcie **(102).**

La figure 4 représente un autre exemple possible de bloc composite terminé de fabrication, cette fois sous la forme d'un monobrin en CVR continu **(20)** d'épaisseur $\mathbf{D_M}$ dont la section est rectangulaire (dans cet exemple carrée), à base des filaments de verre unitaires **(101)** noyés dans la résine durcie **(102).**

Avantageusement, avant dépôt de la gaine de matière thermoplastique **(12),** les monobrins **(10, 20)** peuvent être soumis à un traitement d'adhérisation afin d'améliorer l'adhésion ultérieure entre la résine thermodurcie **(102)** précédemment décrite et la gaine thermoplastique **(12).** Un traitement chimique approprié pourra par exemple consister en un passage préalable dans un bain aqueux à base de résine époxy et/ou composé isocyanate, suivi d'au moins un traitement thermique visant à éliminer l'eau et polymériser la couche adhésive. De tels traitements d'adhérisation sont bien connus de l'homme du métier.

Une fois les monobrins **(10, 20)** fabriqués, puis disposés parallèlement côte à côte selon la direction principale **(X),** ces derniers sont gainés ensemble, recouverts de manière connue d'une couche de matière thermoplastique **(12),** comme illustré par exemple aux figures 2, 3 et 5 qui seront commentées plus en détail ultérieurement.

Cette étape d'enrobage ou recouvrement par la matière thermoplastique est conduite de manière connue par l'homme du métier. Elle consiste par exemple simplement à faire passer les monobrins composites à travers une ou des filières de diamètre adapté, dans des têtes d'extrusion chauffées à des températures appropriées, ou encore dans un bain d'enduction contenant la matière thermoplastique mise préalablement en solution dans un solvant (ou mélange de solvants) organique approprié.

En sortie d'extrusion, les brins ainsi enrobés, gainés par la matière thermoplastique sont ensuite refroidis suffisamment de manière à solidifier la couche de matière thermoplastique, par exemple avec de l'air ou un autre gaz froid, ou par passage dans un bain d'eau suivi d'une étape de séchage.

A titre d'exemple, le recouvrement d'une série de 15 monobrins parallèles en CVR de diamètre proche de 0,6

mm, par une couche de PET d'épaisseur minimale $\mathbf{E_m}$ égale à environ 0,2 mm, pour l'obtention d'un ruban multicomposite ayant une largeur d'environ 15 mm et une épaisseur d'environ 1 mm, est réalisé sur une ligne d'extrusion-gainage comportant par exemple deux filières de calibrage rectangulaires, une première filière (contre-filière ou filière amont) de largeur égale à environ 16 mm et de hauteur égale à environ 1,05 mm et une seconde filière (ou filière aval) de dimensions légèrement plus importantes (par exemple largeur de 20 mm et hauteur de 1,45 mm), disposées toutes deux dans une tête d'extrusion portée à environ 290°C. Ces deux filières dites de calibrage permettent, grâce à une section droite de dimensions déterminées, d'ajuster la proportion de matière thermoplastique par rapport aux monobrins en matériau composite, en imposant au ruban multicomposite la forme et l'épaisseur finales visées.

Le polyester, fondu à une température de 280°C dans l'extrudeuse, recouvre ainsi les monobrins en CVR, séparés préalablement en amont à travers un peigne et agencés de manière appropriée, par le biais de la tête de gainage, à une vitesse de défilement des monobrins égale typiquement à plusieurs dizaines de m/min, pour un débit de pompe d'extrusion typiquement de plusieurs dizaines de $cm^3$/min. En sortie de ce gainage, le ruban obtenu peut être immergé dans un bac de refroidissement rempli d'eau froide, pour solidifier et figer le polyester dans son état amorphe, puis séché par exemple en ligne par une buse d'air, ou par passage de la bobine de réception à l'étuve.

La couche ou gaine recouvrant les monobrins (10) en CVR ou autre matière minérale est donc constituée par une matière thermoplastique (12) dont la température de transition vitreuse ($\mathbf{Tg_2}$) est de préférence supérieure à -30°C, plus préférentiellement supérieure à 20°C, encore plus préférentiellement supérieure à 50°C, en particulier supérieure à 70°C. D'autre part, la température de fusion (notée **Tf**) de cette matière thermoplastique (12) est de préférence supérieure à 100°C, plus préférentiellement supérieure à 150°C, en particulier supérieure à 200°C.

Préférentiellement, l'épaisseur minimale (notée $\mathbf{E_m}$) de la couche de matière thermoplastique recouvrant chaque monobrin (mesurée « au dos » de chaque monobrin), est comprise entre 0,05 et 0,5 mm, plus préférentiellement entre 0,1 et 0,4 mm, en particulier entre 0,1 et 0,3 mm.

Préférentiellement, le module initial en extension de cette matière thermoplastique (12) est compris entre 300 et 3000 MPa, plus préférentiellement entre 500 et 2500 MPa, en particulier entre 500 et 1500 MPa ; son allongement élastique est de préférence supérieur à 5%, plus préférentiellement supérieur à 8%, en particulier supérieur à 10% ; son allongement à la rupture est de préférence supérieur à 10%, plus préférentiellement à 15%, en particulier supérieur à 20%.

Typiquement, la matière thermoplastique est un polymère ou une composition polymérique (composition à base d'au moins un polymère et d'au moins un additif).

Ce polymère thermoplastique est choisi de préférence dans le groupe constitué par les polyamides, les polyesters, les polyimides et les mélanges de tels polymères, plus particulièrement dans le groupe constitué par les polyamides aliphatiques, les polyesters, et les mélanges de tels polymères. Parmi les polyamides aliphatiques, on peut citer notamment les polyamides 4-6, 6, 6-6, 11 ou 12. Le polymère thermoplastique est préférentiellement un polyester ; parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Au polymère ou mélange de polymères ci-dessus, peuvent être éventuellement ajoutés, pour constituer une composition polymérique, divers additifs tels que colorant, charge, plastifiant, antioxydant ou autre stabilisant. On pourra avantageusement ajouter à la matière thermoplastique ci-dessus, des composants compatibles, de préférence eux-mêmes thermoplastiques, susceptibles de favoriser l'adhésion à une matrice de caoutchouc diénique, par exemple des élastomères TPS (thermoplastiques styréniques) du type insaturés, notamment époxydés, tels que décrits par exemple dans les demandes WO 2013/117474 et WO 2013/117475

Selon un mode de réalisation préférentiel, la gaine (12) comprend une matière thermoplastique unique. En variante, la gaine (12) pourrait toutefois comprendre plusieurs matières thermoplastiques distinctes.

A titre de polymère thermoplastique, on pourrait aussi utiliser des élastomères thermoplastiques (TPE), notamment des élastomères TPS, saturés ou non saturés, tels que décrits par exemple dans les demandes WO2010/105975, WO2010/136389, WO2011/012521, WO2011/051204, WO2012/016757, WO2012/038340, WO2012/038341, WO2012/069346, WO2012/104279, WO2012/104280 et WO2012/104281, ou encore des mélanges de polymères non élastomères tel que décrits précédemment et de tels élastomères thermoplastiques.

On rappellera ici que les élastomères thermoplastiques (par exemple styréniques), de structure intermédiaire entre polymères thermoplastiques et élastomères, sont constitués de manière connue de séquences rigides thermoplastiques (par exemple polystyrène) reliées par des séquences souples élastomère, par exemple polybutadiène, polyisoprène ou poly(éthylène/butylène). C'est la raison pour laquelle, de manière connue, les copolymères TPE ou TPS se caractérisent généralement par la présence de deux pics de transition vitreuse, le premier pic (température la plus basse, généralement négative) étant relatif à la séquence élastomère du copolymère, le second pic (température la plus haute, généralement et préférentiellement positive, correspondant à $\mathbf{Tg_2}$) étant relatif à la partie thermoplastique (par exemple blocs styrène) du copolymère.

$\mathbf{Tg_1}$, $\mathbf{Tg_2}$ sont mesurées de manière connue par DSC (*Differential Scanning Calorimetry*), au second passage,

par exemple et sauf indications différentes spécifiées dans la présente demande, selon la norme ASTM D3418 de 1999 (appareil DSC "822-2" de Mettler Toledo ; atmosphère azote ; échantillons préalablement portés de la température ambiante (20°C) à 250°C (10°C/min), puis refroidis rapidement (trempe) jusqu'à une température de préférence inférieure d'au moins 50°C à la température Tg considérée (par exemple jusqu'à 20°C), avant enregistrement final de la courbe de DSC de cette température de trempe (par exemple 20°C) jusqu'à 250°C, selon une rampe de 10°C/min).

La figure 2 schématise, en coupe transversale, un exemple (**R1**) de ruban multicomposite conforme à l'invention, dans lequel une série (par exemple une quinzaine) de monobrins en CVR (10a, 10b, 10c, 10d, 10e, ....) tels que décrits précédemment, par exemple de diamètre $\mathbf{D_M}$ égal à 0,6 mm, a été recouvert par sa couche, gaine de matière thermoplastique, par exemple en PET, d'épaisseur minimale notée $\mathbf{E_m}$ (par exemple égale à environ 0,2 mm) mesurée au dos de chaque monobrin.

Dans cet exemple, la section droite de chaque monobrin est circulaire. Ces monobrins sont disposés sensiblement dans un même plan (X, Y), alignés parallèlement selon la direction principale (X). L'épaisseur notée $\mathbf{E_R}$ de ce ruban **R1** de l'invention, égale à $\mathbf{D_M}$+2 $\mathbf{E_m}$, est donc égale à environ 1,0 mm dans cet exemple. Sa largeur notée $\mathbf{L_R}$ est par exemple égale à 15 mm, le rapport $\mathbf{L_R/E_R}$ étant ainsi égal à environ 15.

La figure 3 schématise, en coupe transversale, un autre exemple **(R2)** de ruban multicomposite conforme à l'invention, dans lequel une série de monobrins (10a, 10b, 10c, 10d, 10e, ....), par exemple de diamètre $\mathbf{D_M}$ égal à 0,6 mm, a été recouvert par sa couche, gaine de matière thermoplastique, par exemple en PET, d'épaisseur minimale notée $\mathbf{E_m}$ (par exemple égale à environ 0,2 mm) mesurée au dos de chaque monobrin.

Dans cet exemple, la section droite de chaque monobrin est circulaire. Ces monobrins sont disposés cette fois en « quinconce » (décalés l'un par rapport au suivant, dans la direction Z), alignés parallèlement selon la direction principale (X). L'épaisseur notée $\mathbf{E_R}$ de ce ruban **R1** de l'invention, supérieure à $\mathbf{D_M}$+2 $\mathbf{E_m}$, est par exemple égale à environ 1,5 mm dans cet exemple. Sa largeur notée $\mathbf{L_R}$ est par exemple égale à 15 mm, le rapport $\mathbf{L_R/E_R}$ étant ainsi égal à environ 10.

La figure 5 schématise, en coupe transversale, un autre exemple **(R3)** de ruban multicomposite conforme à l'invention, dans lequel une série (par exemple entre 10 et 30) de monobrins (20a, 20b, 20c, 20d, 20e, ....), par exemple de diamètre $\mathbf{D_M}$ égal à 0,6 mm, a été recouvert par sa couche, gaine de matière thermoplastique, par exemple en PET, d'épaisseur minimale notée $\mathbf{E_m}$ (par exemple égale à environ 0,2 mm) mesurée au dos de chaque monobrin.

Dans cet exemple, la section droite de chaque monobrin est sensiblement carrée. Ces monobrins sont disposés sensiblement dans un même plan (X, Y), alignés parallèlement selon la direction principale (X). L'épaisseur notée $\mathbf{E_R}$ de ce ruban **R1** de l'invention, égal à $\mathbf{D_M}$+2 $\mathbf{E_m}$, est donc égale à environ 1,0 mm dans cet exemple.

Grâce à la présence combinée de ses filaments de verre, de sa matrice thermodurcie et de la gaine thermoplastique remplissant en quelque sorte une fonction de frettage (« limiteur de déformation ») des monobrins, le ruban multicomposite de l'invention se caractérise par une cohésion transversale améliorée, une haute stabilité dimensionnelle, mécanique et thermique.

De préférence, dans le ruban multicomposite de l'invention, les monobrins sont non jointifs dans le plan (Y, Z) de la section transversale du ruban, afin qu'ils puissent se déformer et travailler de manière optimale les uns par rapport aux autres dans la matrice thermoplastique, en flexion, compression et/ou cisaillement.

Plus préférentiellement, comme illustré à titre d'exemples aux figures 2, 3 et 5, les monobrins sont deux à deux séparés d'une distance moyenne notée « **d** », mesurée dans ce plan **(Y, Z),** telle que le rapport $\mathbf{d/D_M}$ est compris entre 0,1 et 3. Par distance moyenne « **d** », on entend bien entendu la moyenne calculée sur le total (par exemple 20) des monobrins (10a, 10b, 10, 10d, 10e, ... ; 20 a, 20b, 20c, 20d, 20e, ...) présents dans le ruban de l'invention, cette moyenne étant elle-même moyennée sur 10 coupes transversales successives du ruban de l'invention, distantes l'une de l'autre d'au moins 10 cm.

Si $\mathbf{d/D_M}$ est inférieur à 0,1, on risque s'exposer à un certain manque de souplesse, notamment en cisaillement transversal, du ruban alors que si $\mathbf{d/D_M}$ est supérieur à 3, un manque d'uniformité de la déformation en flexion et/ou compression peut apparaître. Pour ces raisons, le rapport d/ $D_M$ est plus préférentiellement compris entre 0,2 et 2, plus préférentiellement encore entre 0,5 et 1,5, particulièrement dans le cas du renforcement d'un bandage pour véhicule.

Le nombre de monobrins, dans le ruban de l'invention, est compris de préférence entre 3 et 100, plus préférentiellement entre 5 et 50, encore plus préférentiellement dans un domaine de 10 à 40, en particulier dans un domaine de 10 à 30, notamment dans le cas du renforcement d'un bandage pour véhicule.

De préférence, comme illustré aux figures 2, 3 et 5, l'épaisseur minimale ($\mathbf{E_m}$) de la couche de matière thermoplastique recouvrant chaque monobrin (donc mesurée « au dos » de chaque monobrin) à la périphérie du renfort, est comprise entre 0,05 et 0,5 mm, de préférence entre 0,1 et 0,4 mm. Cette épaisseur ($\mathbf{E_m}$) est bien entendu l'épaisseur moyenne calculée sur le total (par exemple au nombre de 20) des monobrins présents dans le ruban de l'invention, cette moyenne étant elle-même moyennée sur 10 coupes transversales différentes du ruban composite, par convention distantes l'une de l'autre d'au moins 10 cm.

De préférence, en particulier pour une utilisation comme élément de renforcement dans une ceinture de bandage, le module longitudinal $\mathbf{E_{RL20}}$ du ruban est supérieur à 10 GPa, plus préférentiellement compris entre 12 et 20

GPa, et son module transversal $E_{RT20}$ est supérieur à 1000 MPa, en particulier compris entre 1300 et 2500 MPa.

L'invention concerne également un stratifié multicouches comportant au moins un renfort multi-composite selon l'invention tel que décrit précédemment, disposé entre et au contact de deux couches de composition de caoutchouc ou élastomère, notamment diénique.

Dans la présente demande, on entend de manière connue, par :

- "stratifié" ou "stratifié multicouches", au sens de la classification internationale des brevets : tout produit comportant au moins deux couches, de forme plane ou non plane, qui sont au contact l'une de l'autre, ces dernières pouvant être ou non liées, connectées entre elles ; l'expression "lié" ou "connecté" doit être interprétée de façon extensive de manière à inclure tous les moyens de liaison ou d'assemblage, en particulier par collage ;
- caoutchouc "diénique" : tout élastomère (élastomère seul ou mélange d'élastomères) qui est issu, au moins en partie (i.e., un homopolymère ou un copolymère), de monomères diènes c'est-à-dire de monomères porteurs de deux doubles liaisons carbone-carbone, que ces dernières soient conjuguées ou non.

La figure 6 représente un exemple d'un tel stratifié multicouches **(30)** comportant un ruban multi-composite (**R1**), constitué d'une série de monobrins en CVR (10a, 10b, 10c, 10d, 10e, ...) tels que schématisés à la Fig. 1 précédente, noyés dans leur gaine thermoplastique (12), ce ruban multicomposite selon l'invention (**R1**) étant lui-même disposé entre et au contact de deux couches (**14a**, **14b**) de compositions de caoutchouc (par exemple élastomère diénique) de formulations identiques ou différentes, pour constituer le stratifié multicouches final conforme à l'invention **(30).**

Ce stratifié multicouches léger et performant, insensible à la corrosion, permet de remplacer avantageusement les nappes conventionnelles renforcées de câbles d'acier.

Grâce en outre à la présence d'une quantité notable de matière thermoplastique remplaçant le caoutchouc, ce stratifié de l'invention présente en outre l'avantage d'être faiblement hystérétique comparativement à ces tissus conventionnels. Or, un objectif majeur des manufacturiers de bandages pneumatiques est aussi d'abaisser l'hystérèse de leurs constituants pour réduire la résistance au roulement de ces bandages.

Parmi tous les avantages du stratifié multicouches de l'invention, on peut citer le fait que la gaine thermoplastique (12) présente une rigidité intermédiaire entre la rigidité des monobrins (10) et la rigidité de la matrice de caoutchouc (14a, 14b). La rigidité entre les monobrins et la matrice de caoutchouc étant donc moins discontinue qu'en l'absence de gaine (12), ceci réduit les contraintes exercées aux interfaces et améliore l'endurance globale du stratifié multicouches.

Chaque couche de composition de caoutchouc, ou ci-après "couche de caoutchouc", constitutive du stratifié multicouches du bandage pneumatique de l'invention est à base d'au moins un élastomère, de préférence du type diénique.

Cet élastomère diénique est de préférence choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon un mode de réalisation préférentiel, chaque couche de composition de caoutchouc comporte 50 à 100 pce de caoutchouc naturel. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

La composition de caoutchouc peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique, des résines plastifiantes à haute température de transition vitreuse, des agents de mise en oeuvre, des résines tackifiantes, des agents antiréversion, des accepteurs et donneurs de méthylène, des résines renforçantes, un système de réticulation ou de vulcanisation.

De préférence, le système de réticulation de la composition de caoutchouc est un système dit de vulcanisation, c'est-à-dire à base de soufre (ou d'un agent donneur de soufre) et d'un accélérateur primaire de vulcanisation. A ce

système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone ou de la silice, est de préférence supérieur à 50 pce, notamment compris entre 50 et 150 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 $m^2/g$, de préférence de 30 à 400 $m^2/g$.

L'homme de l'art saura, à la lumière de la présente description, ajuster la formulation de la composition de caoutchouc afin d'atteindre les niveaux de propriétés (notamment module d'élasticité) souhaités, et adapter la formulation à l'application spécifique envisagée.

De préférence, la composition de caoutchouc présente, à l'état réticulé, un module sécant en extension, à 10% d'allongement, qui est compris entre 4 et 25 MPa, plus préférentiellement entre 4 et 20 MPa ; des valeurs comprises notamment entre 5 et 15 MPa se sont révélées convenir particulièrement pour le renforcement des ceintures de bandages de pneumatiques. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Selon un mode de réalisation préférentiel, dans le stratifié multicouches de l'invention, la couche thermoplastique (12) est pourvue d'une couche adhésive au regard de chaque couche de composition de caoutchouc avec laquelle elle est au contact.

Pour faire adhérer le caoutchouc à cette matière thermoplastique, on pourra utiliser tout système adhésif approprié, par exemple une simple colle textile du type "RFL" (résorcinol-formaldéhyde-latex) comportant au moins un élastomère diénique tel que du caoutchouc naturel, ou toute colle équivalente connue pour conférer une adhésion satisfaisante entre du caoutchouc et des fibres thermoplastiques conventionnelles telles que des fibres en polyester ou en polyamide, comme par exemple les compositions adhésives décrites dans les demandes WO 2013/017421, WO 2013/017422, WO 2013/017423.

A titre d'exemple, le procédé d'encollage peut comporter essentiellement les étapes successives suivantes : passage dans un bain de colle, suivi d'un essorage (par exemple par soufflage, calibrage) pour éliminer l'excès de colle ; puis séchage par exemple par passage dans un four ou tunnel chauffant (par exemple pendant 30 s à 180°C) et enfin traitement thermique (par exemple pendant 30 s à 230°C).

Avant l'encollage ci-dessus, il peut être avantageux d'activer la surface de la matière thermoplastique, par exemple par voie mécanique et/ou physique et/ou chimique, pour améliorer sa prise de colle et/ou son adhésion finale au caoutchouc. Un traitement mécanique pourra consister par exemple en une étape préalable de matage ou de rayage de la surface ; un traitement physique pourra consister par exemple en un traitement par un rayonnement tel qu'un faisceau d'électrons ; un traitement chimique pourra par exemple consister en un passage préalable dans un bain de résine époxy et/ou de composé isocyanate.

La surface de la matière thermoplastique étant en règle générale lisse, il peut être également avantageux d'ajouter un épaississant à la colle utilisée, afin d'améliorer la prise totale de colle du renfort multi-composite lors de son encollage.

L'homme du métier comprendra aisément que la connexion entre la couche de polymère thermoplastique du renfort multi-composite de l'invention et chaque couche de caoutchouc avec laquelle il est au contact dans le stratifié multicouches de l'invention, est assurée définitivement lors de la cuisson (réticulation) finale de l'article en caoutchouc, notamment bandage, auquel se destine le stratifié.

## 5. EXEMPLES DE REALISATION DE L'INVENTION

On décrit ci-après des exemples de fabrication de monobrins en CVR, puis de rubans multicomposites et de stratifiés multicouches selon l'invention à base de ces monobrins en CVR, et leur utilisation comme éléments de renforcement de bandages pneumatiques.

La figure 7 annexée schématise très simplement un exemple d'un dispositif 100 permettant la production de monobrins (10) tels que schématisés à la figure 1.

On y voit une bobine 110 contenant, dans l'exemple illustré, des fibres de verre 111 (sous forme de multifilaments 101). La bobine est déroulée en continu par entraînement, de manière à réaliser un arrangement rectiligne 112 de ces fibres 111. En général, les fibres de renforcement sont livrées en "rovings", c'est à dire déjà en groupes de fibres enroulées en parallèle sur une bobine ; par exemple, on utilise des fibres commercialisées par Owens Corning sous la

désignation de fibre "Advantex", de titre égal à 1200 tex (pour rappel, 1 tex = 1 g/1000 m de fibre). C'est par exemple la traction exercée par la réception tournante 126 qui va permettre l'avancement des fibres en parallèle et du monobrin en CVR tout le long de l'installation 100.

Cet arrangement 112 traverse ensuite une chambre à vide 113 (reliée à une pompe à vide non représentée), disposée entre une tubulure d'entrée 113a et une tubulure de sortie 113b débouchant sur une chambre d'imprégnation 114, les deux tubulures de préférence à paroi rigide ayant par exemple une section minimale supérieure (typiquement deux fois plus) à la section totale de fibres et une longueur très supérieure (typiquement 50 fois plus) à ladite section minimale.

Comme déjà enseigné par la demande EP-A-1 174 250 précitée, l'utilisation de tubulures à paroi rigide, aussi bien pour l'orifice d'entrée dans la chambre à vide que pour l'orifice de sortie de la chambre à vide et le transfert depuis la chambre à vide jusqu'à la chambre d'imprégnation, s'avère compatible à la fois avec des cadences élevées de passage des fibres au travers des orifices sans rompre les fibres, mais aussi permet d'assurer une étanchéité suffisante. Il suffit, au besoin expérimentalement, de rechercher la plus grande section de passage, compte tenu de la section totale des fibres à traiter, permettant encore d'offrir une étanchéité suffisante, compte tenu de la vitesse d'avancement des fibres et de la longueur des tubulures. Typiquement, le vide à l'intérieur de la chambre 113 est par exemple de l'ordre de 0,1 bar, la longueur de la chambre à vide est d'environ 1 mètre.

En sortie de la chambre à vide 113 et de la tubulure de sortie 113b , l'arrangement 112 de fibres 111 traverse une chambre d'imprégnation 114 comportant un réservoir d'alimentation 115 (relié à une pompe doseuse non représentée) et un réservoir d'imprégnation 116 étanche totalement rempli de composition d'imprégnation 117 à base d'une résine durcissable du type vinylester (e.g., "E-Nova FW 2045" de DSM). A titre d'exemple, la composition 117 comporte en outre (à un taux pondéral de 1 à 2%) un agent photo-initiateur approprié pour le rayonnement UV et/ou UV-visible par lequel la composition sera ultérieurement traitée, par exemple l'oxyde de bis-(2,4,6-triméthylbenzoyl)-phénylphosphine ("Irgacure 819" de la société BASF). Elle peut également comporter (par exemple environ 5% à 15 %) d'un agent réticulant tel que par exemple le tris(2-hydroxy éthyl)isocyanurate triacrylate (« SR 368 » de la société Sartomer). Bien entendu, la composition d'imprégnation 117 est à l'état liquide.

Préférentiellement, la longueur de la chambre d'imprégnation est de plusieurs mètres, par exemple comprise entre 2 et 10 m, en particulier entre 3 et 5 m.

Ainsi, ressort de la chambre d'imprégnation 114, dans une tubulure de sortie 118 étanche (toujours sous vide primaire), un imprégné qui comporte par exemple (% en poids) de 65 à 75% de fibres solides 111, le reste (25 à 35%) étant constitué par la matrice liquide d'imprégnation 117.

L'imprégné passe ensuite à travers des moyens de calibrage 119 comportant au moins une filière de calibrage 120 dont le canal (non représenté ici), par exemple de forme circulaire, rectangulaire ou encore conique, est adapté aux conditions particulières de réalisation. A titre d'exemple, ce canal a une section droite minimale de forme circulaire dont l'orifice aval a un diamètre légèrement supérieur à celui du monobrin visé. Ladite filière a une longueur qui est typiquement supérieure d'au moins 100 fois à la dimension minimale de la section minimale. Elle a pour fonction d'assurer une grande précision dimensionnelle au produit fini, elle peut également jouer un rôle de dosage du taux de fibre par rapport à la résine. Selon une variante de réalisation possible, la filière 120 peut être directement intégrée à la chambre d'imprégnation 114, ce qui évite par exemple l'emploi de la tubulure de sortie 118.

Préférentiellement, la longueur de la zone de calibrage est de plusieurs centimètres, par exemple comprise entre 5 et 50 cm, en particulier entre 5 et 20 cm.

Grâce aux moyens de calibrage (119, 120) est obtenu à ce stade un monobrin composite "liquide" (121), liquide au sens que sa résine d'imprégnation est à ce stade toujours liquide, dont la forme de la section droite est préférentiellement essentiellement circulaire.

En sortie des moyens de calibrage (119, 120), le monobrin composite liquide (121) ainsi obtenu est ensuite polymérisé par passage à travers une chambre d'irradiation UV (122) comportant un tube en verre étanche (123) à travers lequel circule le monobrin composite ; ledit tube, dont le diamètre est typiquement de quelques cm (par exemple 2 à 3 cm), est irradié par une pluralité (ici, par exemple au nombre de 4) d'irradiateurs UV (124) en ligne (lampes "UVAprint" de la société Dr. Hönle, de longueur d'onde 200 à 600 nm) disposés à courte distance (quelques cm) du tube en verre. Préférentiellement, la longueur de la chambre d'irradiation est de plusieurs mètres, par exemple comprise entre 2 et 15 m, en particulier entre 3 et 10 m. Le tube d'irradiation 123 est dans cet exemple parcouru par un courant d'azote.

Les conditions d'irradiation sont préférentiellement ajustées de telle manière que, en sortie de la chambre d'imprégnation, la température du monobrin en CVR, mesurée en surface de ce dernier (par exemple à l'aide d'un thermocouple), soit supérieure à la Tg (**$Tg_1$**) de la résine réticulée (en d'autres termes supérieure à 150°C), et plus préférentiellement inférieure à 270°C.

Une fois la résine polymérisée (durcie), le monobrin en CVR (125), cette fois à l'état solide, entraîné dans le sens de la flèche F, arrive ensuite sur sa bobine de réception finale (126). On obtient finalement un bloc composite terminé de fabrication tel que schématisé à la figure 1, sous la forme d'un monobrin en CVR continu (10), de très grande

longueur, dont les filaments de verre unitaires (101) sont répartis de manière homogène dans tout le volume de résine durcie (102). Son diamètre est par exemple égal à environ 1 mm. Le procédé décrit ci-dessus peut être mise en oeuvre à haute vitesse, de préférence supérieure à 50 m/min, par exemple entre 50 et 150 m/min.

Les monobrins en CVR ainsi obtenus sont ensuite soumis à une opération d'encollage par passage dans un bain aqueux (environ 94% d'eau) essentiellement à base de résine époxy (polyglycérol polyglycidyl éther « DENACOL » EX-512 de Nagase ChemteX Corporation, environ 1%) et de composé isocyanate (bloqué caprolactame, « GRILBOND » IL-6 de EMS, environ 5%), étape d'encollage suivie d'un séchage (30 s à 185°C) puis d'un traitement thermique (30 s à 200°C).

Ainsi encollés puis assemblés en faisceaux de fibres parallèles (système dévidoir prévu pour plusieurs bobines), les monobrins par exemple au nombre de 17 sont insérés dans un « guide-fil », équipé d'un régulateur de tension, avant montage dans une tête d'extrusion ; ils sont ensuite soumis à une opération de gainage par la matière thermoplastique (12), en l'occurrence un PET (« Artenius Design + » de la société Artenius ; densité > 1,39 ; $Tg_2$ égale à environ 76°C ; Tf égale à environ 230°C) par passage (10 m/min) à travers une tête d'extrusion (extrudeuse « Nextrom » NMC45-24D, portée à 290°C). Le refroidissement a eu lieu par passage dans un bain d'eau froide en sortie d'extrudeuse.

Le ruban multicomposite de l'invention ainsi obtenu, tel que schématisé par exemple sur la figure 2 précédente, avait les propriétés finales suivantes :

> $\mathbf{D_M}$ égal à environ 0,6 mm ; $\mathbf{E_m}$ égale à environ 0,2 mm ; $\mathbf{E_R}$ égale à environ 1,0 mm ; $\mathbf{L_R}$ égale à environ 16 mm ; « **d** » égale à environ 0,3 mm ; $\mathbf{Tg_1}$ égale à environ 180°C ; $\mathbf{Tg_2}$ égale à environ 76°C ; **Ar** égal à environ 3,8 % ; $\mathbf{E_{RL20}}$ égal à environ 14 GPa ; $\mathbf{E_{RT20}}$ égal à environ 1800 MPa ; $\mathbf{E_{M20}}$ égal à environ 34 GPa ; $\mathbf{E'_{150}}$ égal à environ 30 GPa; $\mathbf{E'_{(Tg1-25)} / E'_{20}}$ égal à environ 0,92 ; déformation élastique en compression sous flexion de chaque monobrin égale à environ 3,6 % ; contrainte de rupture en compression sous flexion de chaque monobrin égale à environ 1350 MPa ; taux pondéral de fibres de verre dans chaque monobrin égal à environ 70% ; module initial en extension de la résine vinylester thermodurcie, à 20°C, égal à environ 3,6 GPa ; module initial en extension du PET (à 20°C) égal à environ 1100 MPa ; allongement élastique du PET (à 20°C) supérieur à 5% ; allongement à la rupture du PET (à 20°C) supérieur à 10%.

Le ruban multicomposite de l'invention ainsi fabriqué est avantageusement utilisable, notamment sous la forme d'un stratifié multicouches conforme à l'invention, pour le renforcement de bandages, pneumatiques ou non pneumatiques, de tous types de véhicules, en particulier de véhicules tourisme ou véhicules industriels tels que Poids-lourd, Génie civil, avions, autres véhicules de transport ou de manutention.

A titre d'exemple, la figure 8 représente de manière très schématique (sans respect d'une échelle spécifique), une coupe radiale d'un bandage pneumatique, conforme ou non à l'invention dans cette représentation générale.

Ce bandage pneumatique 200 comporte un sommet 202 renforcé par une armature de sommet ou ceinture 206, deux flancs 203 et deux bourrelets 204, chacun de ces bourrelets 204 étant renforcé avec une tringle 205. Le sommet 202 est surmonté d'une bande de roulement non représentée sur cette figure schématique. Une armature de carcasse 207 est enroulée autour des deux tringles 205 dans chaque bourrelet 204, le retournement 208 de cette armature 207 étant par exemple disposé vers l'extérieur du pneumatique 200 qui est ici représenté monté sur sa jante 209. Bien entendu, ce bandage pneumatique 200 comporte en outre de manière connue une couche de gomme 201, communément appelée gomme ou couche d'étanchéité, qui définit la face radialement interne du bandage et qui est destinée à protéger la nappe de carcasse de la diffusion d'air provenant de l'espace intérieur au bandage pneumatique.

L'armature de carcasse 207, dans les bandages de l'art antérieur, est généralement constituée d'au moins une nappe de caoutchouc renforcée par des renforts textiles ou métalliques dits "radiaux", c'est-à-dire que ces renforts sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 204 et passe par le milieu de l'armature de sommet 206).

La ceinture 206 est par exemple constituée, dans les bandages de l'art antérieur, par au moins deux nappes de caoutchouc dites "nappes de travail" ou "nappes de triangulation", superposées et croisées, renforcées de câbles métalliques disposés sensiblement parallèlement les uns par rapport aux autres et inclinés par rapport au plan circonférentiel médian, ces nappes de travail pouvant être associées ou non à d'autres nappes et/ou tissus de caoutchouc. Ces nappes de travail ont pour fonction première de donner au bandage pneumatique une rigidité de dérive élevée. La ceinture 206 peut comporter en outre dans cet exemple une nappe de caoutchouc dite "nappe de frettage" renforcée par des fils de renforcement dits "circonférentiels", c'est-à-dire que ces fils de renforcement sont disposés pratiquement parallèles les uns aux autres et s'étendent sensiblement circonférentiellement autour du bandage pneumatique de manière à former un angle préférentiellement compris dans un domaine de 0 à 10° avec le plan circonférentiel médian. Ces fils de renforcement circonférentiels ont notamment pour fonction de résister à la centrifugation du sommet à haute vitesse.

Un bandage pneumatique 200, lorsqu'il est conforme à l'invention, a pour caractéristique préférentielle qu'au

moins sa ceinture (206) et/ou son armature de carcasse (207) comporte un stratifié multicouches selon l'invention, constitué d'au moins un ruban multicomposite selon l'invention disposé entre et au contact de deux couches de composition de caoutchouc diène.

Selon un mode de réalisation particulier de l'invention, ce ruban multicomposite de l'invention peut être utilisé entre et au contact de deux couches de composition de caoutchouc, le stratifié multicouches selon l'invention ainsi obtenu permettant très avantageusement de pouvoir remplacer les deux nappes sommet de triangulation (travail), voire les deux nappes de triangulation et la nappe sommet de frettage.

Selon un autre exemple de réalisation possible de l'invention, c'est la zone bourrelet qui peut être renforcée d'un tel renfort multicomposite ; ce sont par exemple les tringles (5) qui pourraient être constituées, en tout ou partie, d'un renfort multicomposite selon l'invention.

Dans ces exemples de la figure 8, les compositions de caoutchouc utilisées pour les stratifiés multicouches selon l'invention, sont par exemple des compositions conventionnelles pour calandrage de renforts textiles, typiquement à base de caoutchouc naturel, de noir de carbone ou de silice, d'un système de vulcanisation et des additifs usuels. Grâce à l'invention, comparativement aux compositions de caoutchouc renforcées de câbles d'acier, elles sont avantageusement dépourvues de sel métallique tel que sel de cobalt. L'adhésion entre le ruban multicomposite de l'invention et la couche de caoutchouc qui l'enrobe peut être assurée de manière simple et connue, par exemple par une colle usuelle du type RFL (résorcinol-formol-latex), ou à l'aide de colle plus récentes telles que décrites par exemple dans les demandes précitées WO 2013/017421, WO 2013/017422, WO 2013/017423.

En conclusion, les avantages du stratifié multicouches et du ruban multicomposite de l'invention sont nombreux (faible épaisseur, faible densité, faible coût global, insensibilité à la corrosion) comparativement à des tissus métalliques conventionnels, et les résultats obtenus grâce à l'invention ouvrent un très grand nombre d'applications possibles, notamment en tant qu'élément de renforcement de la ceinture de bandages pour véhicules, disposé entre la bande de roulement et l'armature de carcasse de tels bandages.

## Revendications

1. Renfort plat ayant la forme d'un ruban **(R1, R2, R3)** multicomposite définissant trois directions principales perpendiculaires, axiale (X), transversale (Y) et radiale (Z), de largeur $\mathbf{L_R}$ mesurée selon la direction Y comprise entre 2 et 100 mm et d'épaisseur $\mathbf{E_R}$ mesurée selon la direction Z comprise entre 0,1 et 5 mm, le rapport $L_R/E_R$ étant supérieur à 3, ce ruban multicomposite comportant au moins:

   - une pluralité de monobrins **(10, 20)** en matériau composite, orientés selon la direction X, comportant des filaments d'une matière minérale **(101)** noyés dans une résine thermodurcie **(102)** dont la température de transition vitreuse notée $\mathbf{Tg_1}$ est supérieure à 70°C ;
   - cette pluralité de monobrins étant enrobée dans une couche de matière thermoplastique **(12).**

2. Renfort selon la revendication 1, dans lequel $\mathbf{Tg_1}$ est supérieure à 100°C, de préférence supérieure à 150°C.

3. Renfort selon l'une quelconque des revendications 1 à 2, dans lequel la température de transition vitreuse de la matière thermoplastique (12) notée $\mathbf{Tg_2}$ est supérieure à -30°C, de préférence supérieure à 20°C.

4. Renfort selon l'une quelconque des revendications 1 à 3, dont l'allongement à la rupture (**Ar**), mesuré à 20°C, est égal ou supérieur à 3,0%, de préférence égal ou supérieur à 3,5%, et dont le module en extension longitudinal ($\mathbf{E_{RL20}}$), mesuré à 20°C, est supérieur à 10 GPa, de préférence compris entre 10 et 20 GPa

5. Renfort selon l'une quelconque des revendications 1 à 4, dont le module en extension transversal ($\mathbf{E_{RT20}}$), mesuré à 20°C, est supérieur à 300 MPa, de préférence compris entre 300 et 3000 MPa, et dont le module en extension transversal ($\mathbf{E_{RT20}}$), mesuré à 20°C, est supérieur à 1000 MPa, de préférence compris entre 1000 et 3000 MPa.

6. Renfort selon l'une quelconque des revendications 1 à 5, dans lequel le module initial en extension ($\mathbf{E_{M20}}$) de chaque monobrin, mesuré à 20°C, est supérieur à 30 GPa, de préférence supérieure à 33 GPa, et dans lequel la partie réelle du module complexe ($\mathbf{E'_{150}}$) de chaque monobrin, mesurée à 150°C par la méthode DTMA, est supérieure à 25 GPa, de préférence supérieure à 30 GPa.

7. Renfort selon l'une quelconque des revendications 1 à 6, dans lequel le rapport $\mathbf{E'_{(Tg1 - 25)}}$ $\mathbf{E'_{20}}$ est supérieur à 0,85, de préférence supérieur à 0,90, $\mathbf{E'_{20}}$ et $\mathbf{E'_{(Tg1 - 25)}}$ étant la partie réelle du module complexe de chaque monobrin mesurée par DTMA, respectivement à 20°C et à une température exprimée en °C égale à ($\mathbf{Tg_1}$ - 25).

**8.** Renfort selon l'une quelconque des revendications 1 à 7, dans lequel la déformation élastique en compression sous flexion de chaque monobrin est supérieure à 3,0%, de préférence supérieure à 3,5%, et dans lequel la contrainte de rupture en compression sous flexion de chaque monobrin est supérieure à 1 000 MPa, de préférence supérieure à 1 200 MPa.

**9.** Renfort selon l'une quelconque des revendications 1 à 8, dans lequel l'épaisseur (**$D_M$**) mesurée selon Z, de chaque monobrin est comprise entre 0,05 et 3,0 mm, de préférence entre 0,1 et 2,5 mm, et dans lequel les monobrins sont deux à deux séparés d'une distance moyenne « **d** » telle que le rapport **$d/D_M$** est compris entre 0,1 et 3, de préférence entre 0,2 et 2.

**10.** Renfort selon l'une quelconque des revendications 1 à 9, dans lequel la matière minérale est du verre, et la résine thermodurcie est une résine vinylester.

**11.** Renfort selon l'une quelconque des revendications 1 à 10, dans lequel la matière thermoplastique est un polymère ou une composition de polymère, le polymère étant de préférence un polyester.

**12.** Renfort selon l'une quelconque des revendications 1 à 11, dans lequel l'épaisseur minimale (**$E_m$**) de la couche de matière thermoplastique recouvrant chaque monobrin à la périphérie du renfort, est comprise entre 0,05 et 0,5 mm, de préférence entre 0,1 et 0,4 mm.

**13.** Renfort selon l'une quelconque des revendications 1 à 12, dont la largeur **$L_R$** est comprise entre 10 et 40 mm, de préférence entre 10 et 25 mm, et dont l'épaisseur **$E_R$** est comprise entre 0,15 et 3 mm, de préférence entre 0,20 et 2,5 mm.

**14.** Renfort selon l'une quelconque des revendications 1 à 13, dans lequel le rapport $L_R/E_R$ est supérieur à 5, de préférence supérieur à 10.

**15.** Bandage comportant un renfort selon l'une quelconque des revendications 1 à 14.

**Patentansprüche**

**1.** Flacher Festigkeitsträger, welcher die Form eines Mehrfachverbund-Bandes (**R1, R2, R3**) aufweist, das drei zueinander senkrechte Hauptrichtungen definiert, eine axiale (X), eine Querrichtung (Y) und eine radiale (Z), mit einer entlang der Richtung Y gemessenen Breite **$L_R$** zwischen 2 und 100 mm und einer entlang der Richtung Z gemessenen Dicke **$E_R$** zwischen 0,1 und 5 mm, wobei das Verhältnis $L_R/E_R$ größer als 3 ist, wobei dieses Mehrfachverbund-Band wenigstens aufweist:

- mehrere Einzelstränge **(10, 20)** aus Verbundmaterial, die entlang der Richtung X ausgerichtet sind und Fäden aus einem mineralischen Material **(101)** aufweisen, die in ein wärmeaushärtendes Harz **(102)** eingebettet sind, dessen Glasübergangstemperatur, mit **$Tg_1$** bezeichnet, höher als 70 °C ist;
- wobei diese mehreren Einzelstränge mit einer Schicht aus thermoplastischem Material **(12)** ummantelt sind.

**2.** Festigkeitsträger nach Anspruch 1, wobei **$Tg_1$** höher als 100 °C, vorzugsweise höher als 150 °C ist.

**3.** Festigkeitsträger nach einem der Ansprüche 1 bis 2, wobei die Glasübergangstemperatur des thermoplastischen Materials (12), mit **$Tg_2$** bezeichnet, höher als -30 °C, vorzugsweise höher als 20 °C ist.

**4.** Festigkeitsträger nach einem der Ansprüche 1 bis 3, dessen Bruchdehnung (**Ar**), gemessen bei 20 °C, gleich oder größer als 3,0 %, vorzugsweise gleich oder größer als 3,5 % ist und dessen Längsdehnungsmodul (**$E_{RL20}$**), gemessen bei 20 °C, größer als 10 GPa ist und vorzugsweise zwischen 10 und 20 GPa liegt.

**5.** Festigkeitsträger nach einem der Ansprüche 1 bis 4, dessen Querdehnungsmodul (**$E_{RT20}$**), gemessen bei 20 °C, größer als 300 MPa ist und vorzugsweise zwischen 300 und 3000 MPa liegt und dessen Querdehnungsmodul (**$E_{RT20}$**), gemessen bei 20 °C, größer als 1000 MPa ist und vorzugsweise zwischen 1000 und 3000 MPa liegt.

**6.** Festigkeitsträger nach einem der Ansprüche 1 bis 5, wobei der anfängliche Dehnungsmodul (**$E_{M20}$**) jedes Einzelstranges, gemessen bei 20 °C, größer als 30 GPa, vorzugsweise größer als 33 GPa ist, und wobei der Realteil des

komplexen Moduls ($E'_{150}$) jedes Einzelstranges, gemessen bei 150 °C mit dem Verfahren der DMTA, größer als 25 GPa, vorzugsweise größer als 30 GPa ist.

**7.** Festigkeitsträger nach einem der Ansprüche 1 bis 6, wobei das Verhältnis $E'_{(Tg1-25)}/E'_{20}$ größer als 0,85, vorzugsweise größer als 0,90 ist, wobei $E'_{20}$ und $E'_{(Tg1-25)}$ der Realteil des komplexen Moduls jedes Einzelstranges ist, der durch DMTA bei 20 °C bzw. bei einer in °C ausgedrückten Temperatur, die gleich ($Tg_1$-25) ist, gemessen wurde.

**8.** Festigkeitsträger nach einem der Ansprüche 1 bis 7, wobei die elastische Druckverformung unter Biegung jedes Einzelstranges größer als 3,0 %, vorzugsweise größer als 3,5 % ist, und wobei die Bruchspannung bei Kompression unter Biegung jedes Einzelstranges größer als 1000 MPa, vorzugsweise größer als 1200 MPa ist.

**9.** Festigkeitsträger nach einem der Ansprüche 1 bis 8, wobei die entlang Z gemessene Dicke ($D_M$) jedes Einzelstranges zwischen 0,05 und 3,0 mm, vorzugsweise zwischen 0,1 und 2,5 mm liegt, und wobei die Einzelstränge paarweise durch einen solchen mittleren Abstand "**d**" voneinander getrennt sind, dass das Verhältnis $d/D_M$ zwischen 0,1 und 3, vorzugsweise zwischen 0,2 und 2 liegt.

**10.** Festigkeitsträger nach einem der Ansprüche 1 bis 9, wobei das mineralische Material Glas ist und das wärmeaushärtende Harz ein Vinylesterharz ist.

**11.** Festigkeitsträger nach einem der Ansprüche 1 bis 10, wobei das thermoplastische Material ein Polymer oder eine Polymerzusammensetzung ist, wobei das Polymer vorzugsweise ein Polyester ist.

**12.** Festigkeitsträger nach einem der Ansprüche 1 bis 11, wobei die minimale Dicke ($E_m$) der Schicht aus thermoplastischem Material, die jeden Einzelstrang am Umfang des Festigkeitsträgers bedeckt, zwischen 0,05 und 0,5 mm, vorzugsweise zwischen 0,1 und 0,4 mm liegt.

**13.** Festigkeitsträger nach einem der Ansprüche 1 bis 12, dessen Breite $L_R$ zwischen 10 und 40 mm, vorzugsweise zwischen 10 und 25 mm liegt und dessen Dicke $E_R$ zwischen 0,15 und 3 mm, vorzugsweise zwischen 0,20 und 2,5 mm liegt.

**14.** Festigkeitsträger nach einem der Ansprüche 1 bis 13, wobei das Verhältnis $L_R/E_R$ größer als 5, vorzugsweise größer als 10 ist.

**15.** Reifen, welcher einen Festigkeitsträger nach einem der Ansprüche 1 bis 14 aufweist.

## Claims

**1.** Flat reinforcer having the shape of a multicomposite strip (**R1**, **R2, R3)** defining three main perpendicular directions, the axial direction (X), the transverse direction (Y) and the radial direction (Z), having a width $L_R$ measured along the Y direction of between 2 and 100 mm and having a thickness $E_R$ measured along the Z direction of between 0.1 and 5 mm, the ratio $L_R/E_R$ being greater than 3, this multicomposite strip comprising at least:

- a plurality of monofilaments **(10, 20)** made of composite material, orientated along the X direction, comprising filaments of a mineral material **(101)** embedded in a thermoset resin **(102),** the glass transition temperature of which, denoted $Tg_1$, is greater than 70°C;
- this plurality of monofilaments being coated in a layer of thermoplastic material **(12).**

**2.** Reinforcer according to Claim 1, in which $Tg_1$ is greater than 100°C, preferably greater than 150°C.

**3.** Reinforcer according to any one of Claims 1 to 2, in which the glass transition temperature of the thermoplastic material (12), denoted $Tg_2$, is greater than -30°C, preferably greater than 20°C.

**4.** Reinforcer according to any one of Claims 1 to 3, of which the elongation at break (**Ar**), measured at 20°C, is equal to or greater than 3.0%, preferably equal to or greater than 3.5%, and of which the longitudinal tensile modulus ($E_{RL20}$), measured at 20°C, is greater than 10 GPa, preferably between 10 and 20 GPa.

**5.** Reinforcer according to any one of Claims 1 to 4, of which the transverse tensile modulus ($E_{RT20}$), measured at

20°C, is greater than 300 MPa, preferably between 300 and 3000 MPa, and of which the transverse tensile modulus (**$E_{RT20}$**), measured at 20°C, is greater than 1000 MPa, preferably between 1000 and 3000 MPa.

**6.** Reinforcer according to any one of Claims 1 to 5, in which the initial tensile modulus (**$E_{M20}$**) of each monofilament, measured at 20°C, is greater than 30 GPa, preferably greater than 33 GPa, and in which the real part of the complex modulus (**$E'_{150}$**) of each monofilament, measured at 150°C by the DMTA method, is greater than 25 GPa, preferably greater than 30 GPa.

**7.** Reinforcer according to any one of Claims 1 to 6, in which the ratio **$E'_{(Tg1 - 25)} / E'_{20}$** is greater than 0.85, preferably greater than 0.90, **$E'_{20}$** and **$E'_{(Tg1 - 25)}$** being the real part of the complex modulus of each monofilament measured by DMTA, respectively at 20°C and at a temperature expressed in °C equal to (**$Tg_1$** - 25).

**8.** Reinforcer according to any one of Claims 1 to 7, in which the compressive elastic deformation in bending of each monofilament is greater than 3.0%, preferably greater than 3.5%, and in which the compressive breaking stress in bending of each monofilament is greater than 1000 MPa, preferably greater than 1200 MPa.

**9.** Reinforcer according to any one of Claims 1 to 8, in which the thickness (**$D_M$**), measured along Z, of each monofilament is between 0.05 and 3.0 mm, preferably between 0.1 and 2.5 mm, and in which the monofilaments are separated, in twos, by an average distance **"d"** such that the ratio **$d/D_M$** is between 0.1 and 3, preferably between 0.2 and 2.

**10.** Reinforcer according to any one of Claims 1 to 9, in which the mineral material is glass, and in which the thermoset resin is a vinyl ester resin.

**11.** Reinforcer according to any one of Claims 1 to 10, in which the thermoplastic material is a polymer or a polymer composition, the polymer being preferably a polyester.

**12.** Reinforcer according to any one of Claims 1 to 11, in which the minimal thickness (**$E_m$**) of the layer of thermoplastic material covering each monofilament at the periphery of the reinforcer, is between 0.05 and 0.5 mm, preferably between 0.1 and 0.4 mm.

**13.** Reinforcer according to any one of Claims 1 to 12, the width **$L_R$** of which is between 10 and 40 mm, preferably between 10 and 25 mm, and the thickness **$E_R$** of which is between 0.15 and 3 mm, preferably between 0.20 and 2.5 mm.

**14.** Reinforcer according to any one of Claims 1 to 13, in which the ratio $L_R/E_R$ is greater than 5, preferably greater than 10.

**15.** Tyre comprising a reinforcer according to any one of Claims 1 to 14.

Fig. 1

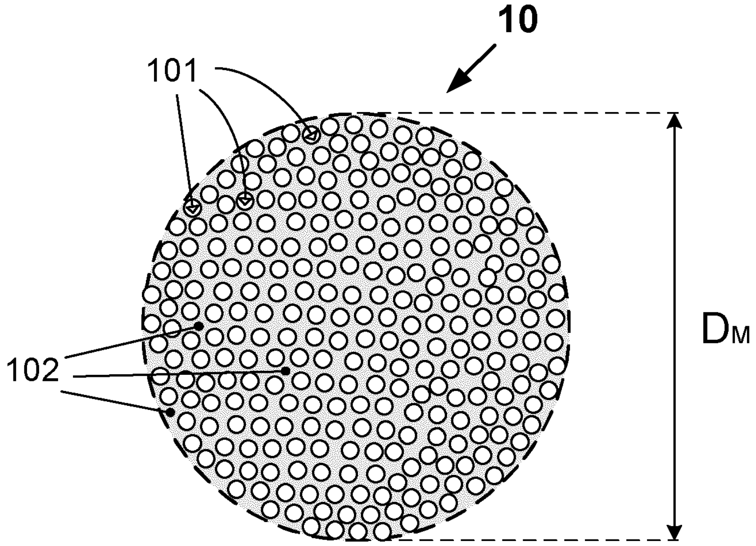


Fig. 2

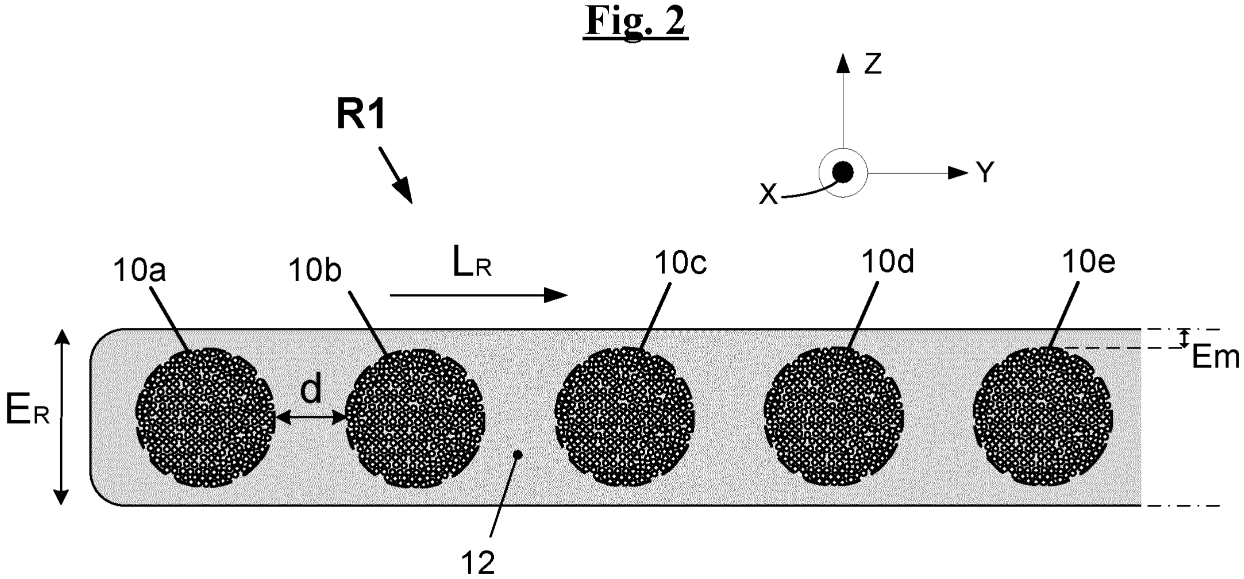

Fig. 3

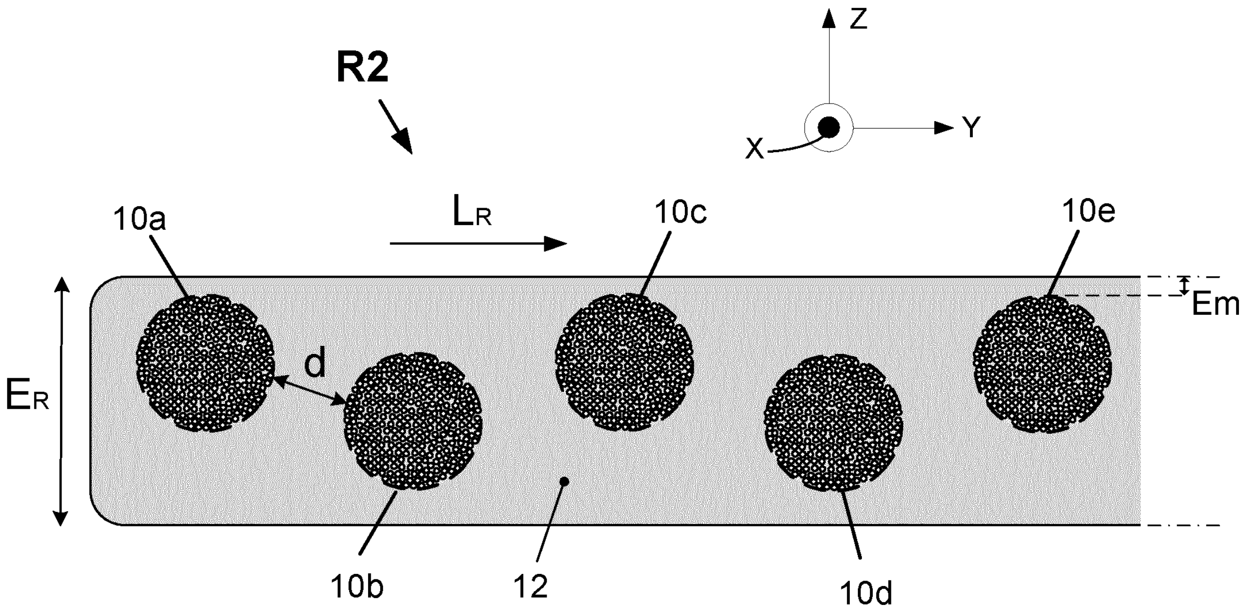

Fig. 4

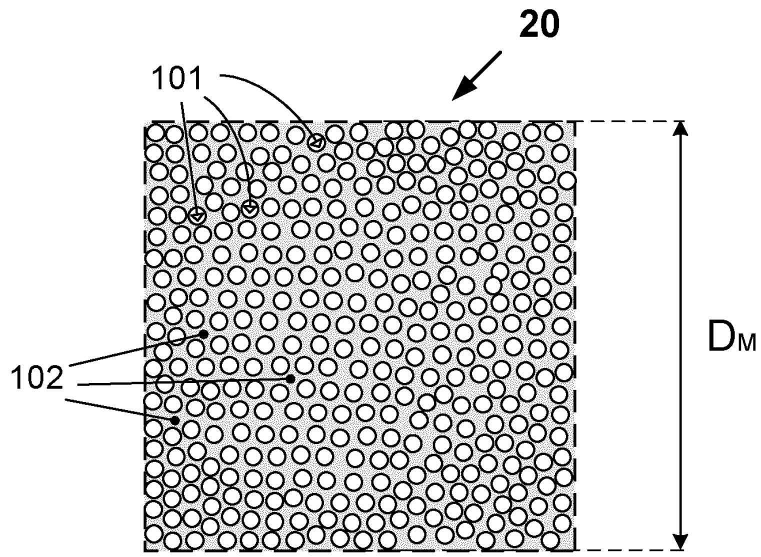


Fig. 5

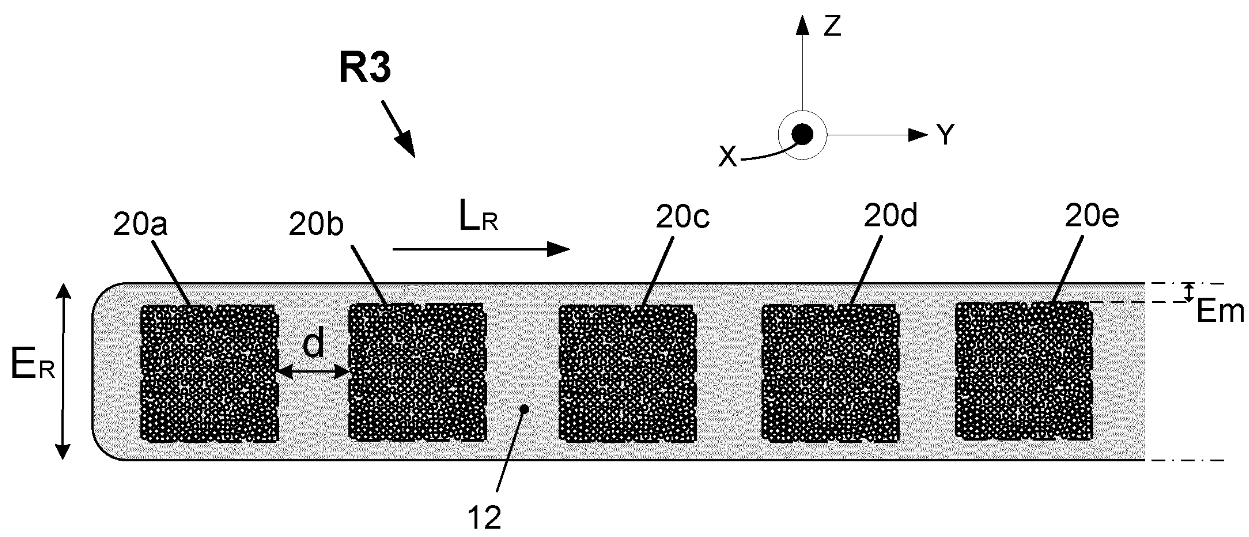

**Fig. 6**

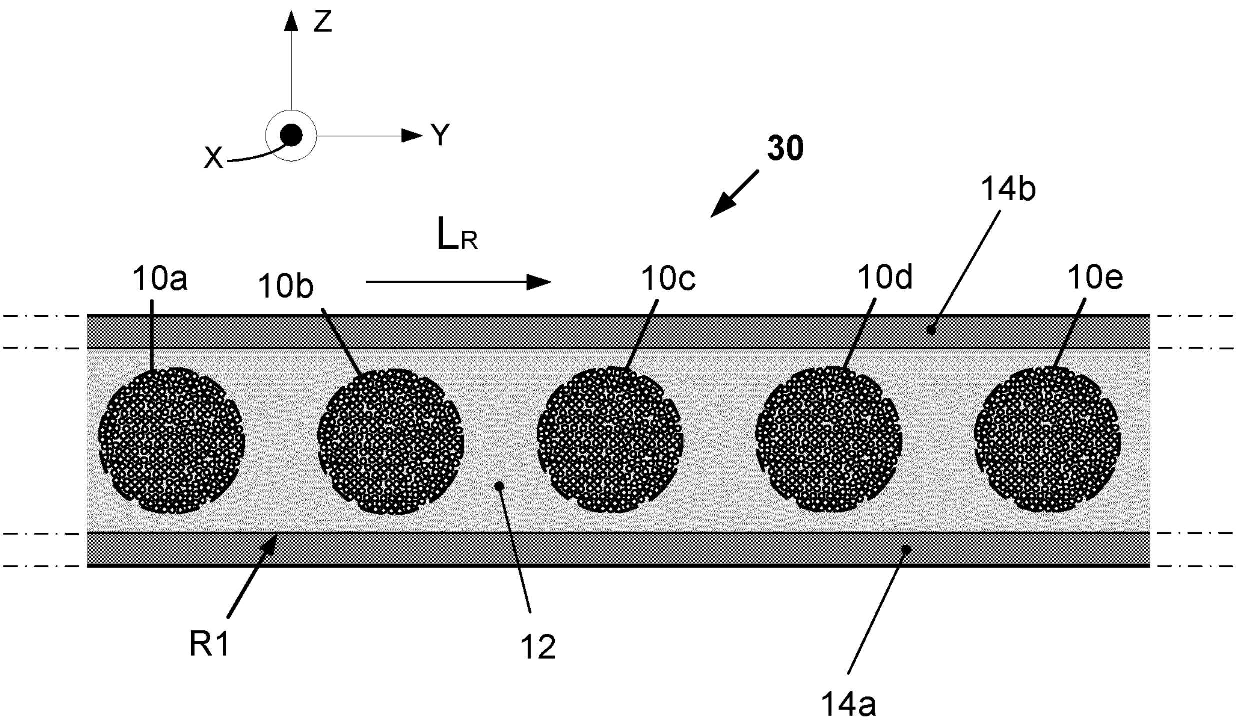

Fig. 7

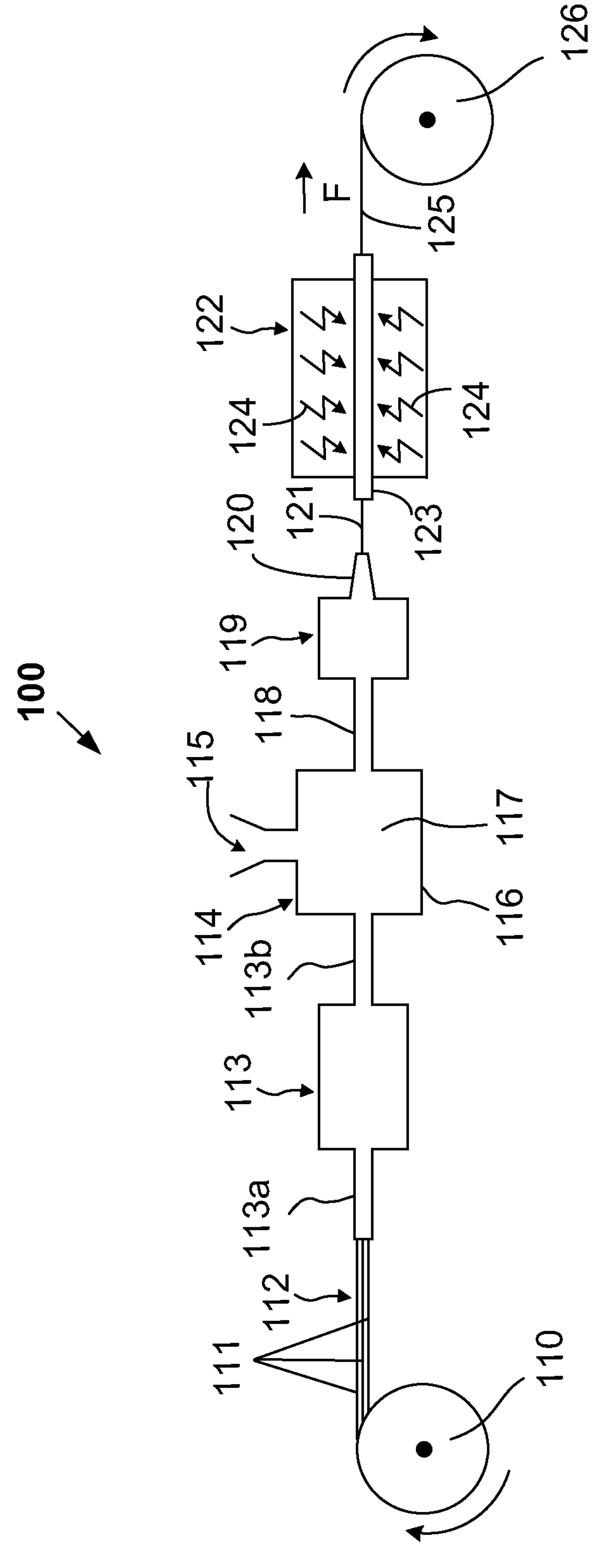
100
110
111
112
113a
113
113b
114
115
116
117
118
119
120
121
122
123
124
124
125
126
F

**Fig. 8**

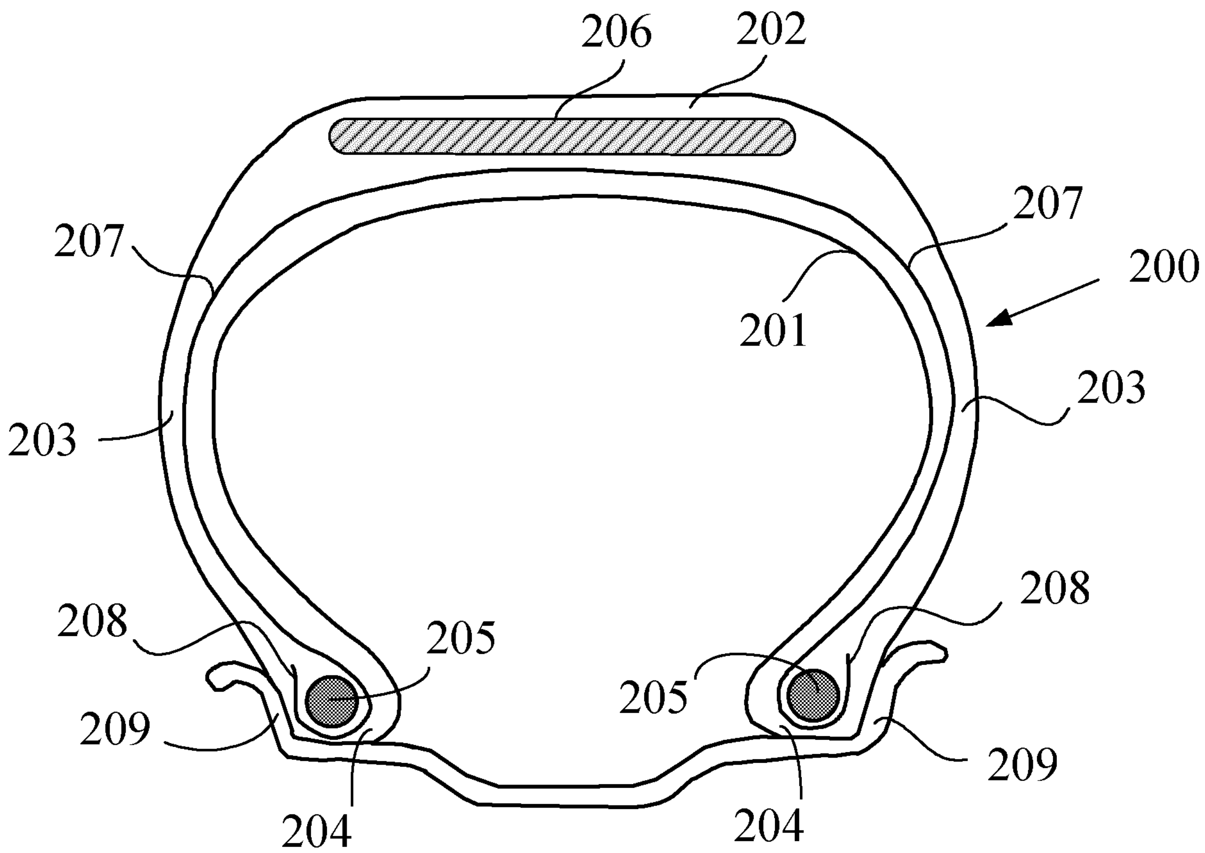

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1167080 A
- US 7032637 B
- EP 1242254 A
- US 6769465 B
- EP 1359028 A
- US 6994135 B
- US 7201194 B
- WO 0037269 A
- US 6640859 B
- WO 2007085414 A
- WO 2008080535 A
- WO 2009033620 A
- WO 2009135561 A
- WO 2012032000 A
- EP 1074369 A
- EP 1174250 A
- WO 2013117474 A
- WO 2013117475 A
- WO 2010105975 A
- WO 2010136389 A
- WO 2011012521 A
- WO 2011051204 A
- WO 2012016757 A
- WO 2012038340 A
- WO 2012038341 A
- WO 2012069346 A
- WO 2012104279 A
- WO 2012104280 A
- WO 2012104281 A
- WO 2013017421 A
- WO 2013017422 A
- WO 2013017423 A

### Littérature non-brevet citée dans la description

- *Dynatest 6.83,* 2010
- **D. INCLAIR.** *J. App. Phys.,* 1950, vol. 21, 380
- **THOMPSON et al.** Critical compressive stress for continuous fiber unidirectional composites. *Journal of Composite Materials,* vol. 46 (26), 3231-3245